# EUROPÄISCHE PATENTSCHRIFT

(11) **EP 4 127 543 B1**
(45) Veröffentlichungstag und Bekanntmachung des Hinweises auf die Patenterteilung: **01.05.2024**
(21) Anmeldenummer: 21709982.9
(22) Anmeldetag: 04.03.2021
(51) Int. Cl.: F16L 37/088, F16L 37/084

(54) **STECKVERBINDER MIT VORMONTAGESICHERUNG**
PLUG-TYPE COUPLING WITH PRE-ASSEMBLY LOCKING
RACCORD DE TYPE ENFICHABLE AYANT UN VERROUILLAGE DE PRÉASSEMBLAGE

(30) Priorität: 24.03.2020 DE 102020108073
(43) Veröffentlichungstag der Anmeldung: 08.02.2023
(73) Patentinhaber: Voss Automotive GmbH, 51688 Wipperfürth (DE)
(72) Erfinder: GINCZEK, Maurice, 51709 Marienheide (DE); HEINRICHS, Eugen, 51702 Bergneustadt (DE); GMEINER, Swen, 51709 Marienheide (DE)
(74) Vertreter: Dr. Solf & Zapf Patent- und Rechtsanwalts PartG mbB
(86) Internationale Anmeldenummer: PCT/EP2021/055464
(87) Internationale Veröffentlichungsnummer: WO 2021/190897

(56) Entgegenhaltungen:
- DE-A1-102012 106 925
- DE-T5-112012 003 590
- US-A1- 2019 107 234
- US-B2- 8 555 480

## Beschreibung

Die Erfindung betrifft einen Steckverbinder gemäß dem Oberbegriff des Anspruchs 1.

Gegensteckverbinder der genannten Art weisen einen Steckerschaft und eine in Montagerichtung hinter dem Steckerschaft ausgebildete Rastnut auf. Das Haltemittel greift, nachdem der Gegensteckverbinder in den Steckverbinder bzw. in die in dem Gegensteckverbinder angeordnete Adapterhülse eingeführt ist, in die Rastnut des Gegensteckverbinders ein und blockiert eine axiale Bewegung des Gegensteckverbinders gegen die Montagerichtung.

Die DE 10 2012 106925 A1 offenbart einen gattungsgemäßen Steckverbinder zum Verbinden zweier Fluidleitungen. Dabei wird in einem Aufnahmekanal eines Gehäuses des Steckverbinders eine Adapterhülse lösbar angeordnet und formschlüssig gehalten. Die Adapterhülse weist zum lösbaren Fixieren eines, in eine Montagerichtung in die Adapterhülse einsteckbaren Gegensteckverbinders radial aufweitbar ausgebildete Haltemittel auf. Diese Haltemittel sind als Rastzungen ausgebildet, an deren Enden Verriegelungsbacken angeordnet sind. Die Rastzungen sind dabei einendig an der Adapterhülse angeformt und erstrecken sich gegen die Montagerichtung weisend zu den Verriegelungsbacken hin. Zur Sicherung des Steckerschafts gegen ein ungewolltes Lösen weist der Steckverbinder ein axial bewegliches Verriegelungselement auf. Dieses Verriegelungselement ist axial auf einem Außenumfang des Gehäuses des Steckverbinders von einer das Haltemittel freigebenden Lösestellung in einer das Haltemittel verriegelnden Verriegelungsstellung beweglich angeordnet. Weiterhin weist das Verriegelungselement Rastarme mit radial zum Gehäuse des Steckverbinders weisenden Nocken auf, welche in einer Vormontagestellung des Steckverbinders derart in korrespondierend ausgebildete Ausnehmungen in Aussparungen im Außenumfang des Gehäuses eingreifen, dass das Verriegelungselement in seiner Lösestellung auf dem Außenumfang des Gehäuses axial gegen eine Bewegung in der Verriegelungsstellung fixiert ist.

Aus der WO 2015/181396 A1 ist ein Steckverbinder zum Anschluss des Gegensteckverbinders bekannt. Bei diesem Steckverbinder weist die Adapterhülse sich in Montagerichtung erstreckende Rastzungen auf, welche im eingesteckten Zustand in Ausnehmungen in eine Umfangswand des Muffenabschnitts in axialer Richtung formschlüssig rastend eingreifen. Weiterhin weist der besagte Steckverbinder sich gegen die Montagerichtung erstreckende Rastarme auf, welche in die Rastnut des Gegensteckverbinders mit Betätigungsfortsätzen eingreifen und die Bewegung des Gegensteckverbinders gegen die Montagerichtung verhindern.

Als nachteilig hat sich herausgestellt, dass die Rastzungen, welche die Adapterhülse formschlüssig im Muffenabschnitt halten, derart groß dimensioniert werden müssen, dass bei einem vorgegebenem Einbauraum für die Verbindung lediglich eine Umfangsdichtung zur Abdichtung eines Umfangsspalts zwischen einer Innenwandung des Aufnahmekanals und dem Steckerschaft des Gegensteckverbinders angeordnet werden kann. Insbesondere bei Gegensteckverbindern mit einem Steckdurchmesser über 14 mm ist daher die bekannte Ausführung nur eingeschränkt nutzbar.

Weiterhin kann es bei der bekannten Ausbildung bei hohen Innendrücken und Temperaturen gelegentlich zu Leckagen kommen, wenn der Gegensteckverbinder gegen die Montagerichtung aus dem Steckverbinder gedrückt wird. Dies wird beispielsweise durch einen unsachgemäßen Gebrauch und/oder äußere Einflüsse begünstigt. Daher ist die Ausführung gemäß der WO 2015/181396 A hinsichtlich des auftretenden Innendrucks und/oder der auftretenden Temperatur nur begrenzt einsetzbar.

Die WO 2015/181396 A1 sieht zur Vermeidung eines ungewollten Lösens des Gegensteckverbinders ein am Außenumfang des Muffenabschnitts angeordnetes Verriegelungselement vor. Das Verriegelungselement ist axial zur Montageachse verschiebbar angeordnet, wobei das Verriegelungselement in einer Verriegelungsstellung eine radiale Spreizung der Rastarme und dadurch eine Freigabe des Gegensteckverbinders verhindert. Hierbei hat sich gezeigt, dass das Verriegelungselement auch ohne eingesteckten Gegensteckverbinder in die Verriegelungsstellung übergehen kann und ein Einstecken des Gegensteckverbinders verhindert, was den Montageaufwand vergrößert.

Ein weiterer Nachteil sind die Rastarme, welche den Steckerschaft des Gegensteckverbinders zur Wahrung der radialelastischen Eigenschaften über eine bestimmte axiale Länge überdecken, dabei allerdings nur eine geringe flächenmäßige Überdeckung des Gegensteckverbinders bieten. Speziell bei großen Baugrößen und Vibrationen, insbesondere bei Gegensteckverbindern mit einem Steckdurchmesser über 14 mm, kann es daher gelegentlich zu einem Versagen und einem Lösen des Gegensteckverbinders vom Steckverbinder.

Der Erfindung liegt die Aufgabe zugrunde, einen Steckverbinder bereit zu stellen, welcher vorzugsweise mit einem aus dem Stand der Technik bekannten Gegensteckverbinder funktioniert, und welcher die aus dem Stand der Technik bekannten Nachteile überwindet, insbesondere zumindest die Sicherheit des Steckverbinders, insbesondere der Steckverbindung, verbessert.

Die Aufgabe wird erfindungsgemäß durch die Merkmale des Anspruchs 1 gelöst. Dadurch, dass das Verriegelungselement in seiner Lösestellung in der Vormontagestellung des Steckverbinders auf dem Muffenabschnitt zumindest axial gegen eine Bewegung in die Verriegelungsstellung fixiert ist, wird verhindert, dass bei einem nicht oder nicht ausreichend tief eingesteckten Gegensteckverbinder in den Steckverbinder bzw. in die Adapterhülse das Verriegelungselement in eine Verriegelungsstellung axial zur Montageachse überführt werden kann. Dabei fixiert ein Formschlusselement die Adapterhülse in dem Aufnahmekanal in axialer Richtung zur Montageachse formschlüssig. Dabei ragt das Formschlusselement in einem Ruhezustand in die Durchgangsöffnung der Adapterhülse hinein und ist radial bezogen auf die Montageachse elastisch in einen Spannungszustand aufweitbar ausgebildet. Zweckmäßig sind hierbei das Formschlusselement und/oder das Haltemittel mittels einer zumindest radial bezogen auf die Montageachse nach außen wirkenden Kraft aus ihrem jeweiligen Ruhezustand in den Spannungszustand elastisch aufweitbar.

Vorteilhaft ist es mittels dieser Ausführung möglich, dass der Steckerschaft beim Einstecken in die Durchgangsöffnung eine radial nach außen wirkende Kraft auf das Formschlusselement und/oder das Haltemittel ausübt und dadurch das jeweilige Element beim Einstecken des Gegensteckverbinders in Montagerichtung oder Rückführen gegen die Montagerichtung in einen Spannungszustand und/oder einen Ruhezustand überführt wird.

Bei der Montage wird der Gegensteckverbinder mit seinem Steckerschaft in Montagerichtung in die Durchführöffnung gesteckt. Dabei passiert der Steckerschaft in der Durchgangsöffnung einen Abschnitt, in dem das Haltemittel, und einen Abschnitt, in dem das Formschlusselement angeordnet ist. Vorzugsweise sind der Steckerschaft, das Formschlusselement und das Haltemittel derart zueinander korrespondierend ausgebildet, dass der Steckerschaft eine radial zur Montageachse nach außen auf das Haltemittel und das Formschlusselement wirkende Kraft ausübt und das Haltemittel und das Formschlusselement dadurch radial nach außen elastisch verformt werden.

In bekannter Weise weist der Gegensteckverbinder hinter dem Steckerschaft eine Rastnut auf, welche einen geringeren Durchmesser aufweist als der Steckerschaft. Zweckmäßig liegt das Haltemittel in der Montagestellung des Steckverbinders benachbart zu der Rastnut eines vollständig eingesteckten Gegensteckverbinders, so dass sich das Haltemittel aus dem aufgeweiteten Spannungszustand im Bereich der Rastnut in den Ruhezustand zurückverformen kann. Vorteilhaft wird dadurch eine axiale Bewegung des Gegensteckverbinders gegen die Montagerichtung formschlüssig blockiert.

Dadurch, dass der Gegensteckverbinder vorteilhafterweise den Spannungszustand und den Ruhezustand des Haltemittels und/oder des Formschlusselements einstellt, ist es möglich, die Einstecktiefe des Gegensteckverbinders während und nach dem Einstecken zu kontrollieren, indem die Zustände des Haltemittels und/oder des Formschlusselements auf den Ruhezustand oder den Spannungszustand kontrolliert werden.

Insbesondere ist das Formschlusselement als Verbindungsklammer ausgebildet und hat zwei Klemmarme ausgebildet. Die Klemmarme ragen im Ruhezustand in die Durchgangsöffnung der Adapterhülse hinein, wobei die Klemmarme vorzugsweise zumindest einen Anlageabschnitt aufweisen. Zweckmäßig sind die Klemmarme über den Anlageabschnitt verbunden, wobei der Anlageabschnitt insbesondere in einem Durchbruch in dem Muffenabschnitt angeordnet wird und einseitig von dem Verriegelungselement übergriffen ist.

Erfindungsgemäß weisen der Muffenabschnitt und die Adapterhülse jeweils zumindest einen in Bezug auf die Montageachse radialen Durchbruch auf. Zweckmäßig sind dabei zumindest jeweils ein Durchbruch der Adapterhülse und des Muffenabschnitts in einem fixierten Zustand der Adapterhülse im Muffenabschnitt derart benachbart zueinander angeordnet, dass das Formschlusselement, insbesondere ein als Verbindungsklammer ausgebildetes Formschlusselement, radial zur Montageachse durch die Durchbrüche der Adapterhülse und des Muffenabschnitts hindurch in die Durchgangsöffnung der Adapterhülse eingeführt werden kann.

Zweckmäßig ragt das Formschlusselement im Ruhezustand radial zur Montageachse aus dem Durchbruch der Adapterhülse radial nach außen heraus. Vorteilhaft blockiert dadurch das Formschlusselement im Ruhezustand die Bewegung des Verriegelungselements aus der Lösestellung in die Verriegelungsstellung.

Vorzugsweise weist die Adapterhülse zwei sich um 180° gegenüberliegende, in Bezug auf die Montageachse radial geöffnete Fenster auf. Die Fenster sind axial zur Montageachse von den Durchbrüchen beabstandet angeordnet. Insbesondere sind dabei die Fenster weiterhin um 90° zu den Durchbrüchen um die Montageachse versetzt angeordnet. Zweckmäßig weist das Haltemittel zwei Haltearme auf, mit welchen es die Fenster umgreift, und ragt im Ruhezustand mit den Haltearmen durch die Fenster in die Durchgangsöffnung der Adapterhülse.

Insbesondere streben die Haltearme aufgrund ihrer Elastizität stets den Ruhezustand an, wodurch sie aktiv in den Spannungszustand gedrängt werden müssen. Besonders vorteilhaft umgreifen die Haltearme den Gegensteckverbinder, wenn dieser in Einsteckrichtung eingesteckt oder in der Durchgangsöffnung in einem Montagezustand angeordnet ist.

Vorzugsweise sind der Steckerschaft des Gegensteckverbinders und die Durchgangsöffnung zylindrisch ausgebildet. Zweckmäßig weist der Steckerschaft des Gegensteckverbinders einen Durchmesser auf, welcher größer ist als der größte Abstand der Haltearme senkrecht durch die Montageachse im Ruhezustand der Haltearme. Insbesondere ist der größte Abstand der Haltearme senkrecht durch die Montageachse im aufgeweiteten Spannungszustand der Haltearme identisch mit dem Durchmesser des Steckerschafts.

In einer weiteren Ausführung weisen die Haltearme zumindest einen Kontaktabschnitt auf. Zweckmäßig weist jeder der Haltearme einen Kontaktabschnitt auf. Der Kontaktabschnitt ist vorteilhaft in einer Kontaktnut angeordnet, die in einem Kontaktelement oder einer Innenwandung der Adapterhülse ausgebildet ist. Besonders vorteilhaft sind in einem Kontaktelement der Adapterhülse zwei in Umfangsrichtung geöffnete Kontaktnuten angeordnet. Die Kontaktnut(en) sind vorteilhafte radiale Abstütz- und Halteelemente für die Haltearme, so dass die Haltearme sich in den Kontaktnuten zumindest radial zur Montageachse abstützen und einhaken können und dadurch in einer Einbaulage in bzw. an der Adapterhülse gehalten werden.

Zweckmäßig steht das Haltemittel radial zur Montageachse mit einem Betätigungsmittel von einem Außenumfang der Adapterhülse nach außen ab beziehungsweise ragt aus dem Durchbruch aus der Adapterhülse heraus. Insbesondere ist dabei der maximale radiale Abstand des Betätigungsmittels zum Außenumfang der Adapterhülse im Ruhezustand größer als in dem Spannungszustand. Besonders vorteilhaft kann durch eine von außen radial auf das Betätigungsmittel wirkende Kraft das Haltemittel aus dem Ruhezustand in den aufgeweiteten Spannungszustand elastisch verformt werden, wobei insbesondere das Betätigungsmittel gegenüberliegend zu der Kontaktnut angeordnet ist. Vorteilhaft stützt sich dabei das Haltemittel radial zur Montageachse mit dem Kontaktabschnitt in der Kontaktnut ab. Durch die von außen radial wirkende Kraft wird das Haltemittel gestaucht und aus dem Ruhezustand in den aufgeweiteten Spannungszustand elastisch verformt. Dadurch wird der maximale Abstand der Haltearme durch die Montageachse derart vergrößert, dass dieser Abstand mindestens dem Durchmesser des Steckerschafts des Gegensteckverbinders entspricht.

Wenn der Gegensteckverbinder nicht derart weit genug in Montagerichtung in die Durchgangsöffnung eingesteckt ist, dass die Rastnut nicht benachbart zu dem Haltemittel angeordnet ist, blockiert das Haltemittel im Spannungszustand, zweckmäßig mit dem Betätigungsmittel, die Bewegung des Verriegelungselements von der Lösestellung in die Verriegelungsstellung. Eine Blockade der Bewegung des Verriegelungselements in die Verriegelungsstellung hat den Vorteil, dass der Anwender eine zusätzliche Einsteckkontrolle hat.

Um vorteilhaft ein ungewolltes Trennen des Gegensteckverbinders von dem Steckverbinder zu verhindern, greift das Verriegelungselement mit mindestens einem axial von dem Verriegelungselement gegen die Montagerichtung hervorstehenden Dorn im Montagezustand in einen Freiraum hinein. Der Freiraum ist zweckmäßig axial zwischen dem Betätigungsmittel und der Adapterhülse durchführend ausgebildet. Vorteilhaft wird dadurch das Haltemittel radial zu der Montageachse im Ruhezustand fixiert, und eine radial von außen in Richtung der Montageachse wirkende Kraft kann das Haltemittel nicht aus dem Ruhezustand in den Spannungszustand versetzen.

Besonders vorteilhaft ist in dem Aufnahmekanal mindestens ein Dichtungselement, vorzugsweise mindestens zwei Dichtungselemente, angeordnet. Vorteilhaft ist das Dichtungselement als O-Ring ausgebildet. Zweckmäßig ist das Dichtungselement zwischen einer in Montagerichtung weisenden Seitenwand der Adapterhülse und einer gegen die Montagerichtung weisenden und sich senkrecht von einer Innenwandung des Aufnahmekanals erstreckenden Stufenfläche angeordnet. Vorzugsweise dichtet das Dichtungselement dabei insbesondere gegen eine Innenwandung des Aufnahmekanals ab.

Als besonders vorteilhaft hat sich eine dreiteilige Dichtung herausgestellt, wobei die Verwendung dieser Dichtung erst durch den erfindungsgemäßen Steckverbinder möglich ist. Die Dichtung weist demnach vorteilhaft zwei Dichtungselemente, insbesondere O-Ringe, auf, welche mit einem Distanzring voneinander getrennt sind. Dieser dreiteilige Verbund wird dann wie zuvor genannt angeordnet.

Weitere vorteilhafte Ausgestaltungen der Erfindung ergeben sich aus der folgenden Figurenbeschreibung und den abhängigen Unteransprüchen.

### Es zeigen:

- Fig. 1: eine Explosionsansicht eines Steckverbinders,
- Fig. 2: eine perspektivische Ansicht eines Gehäuses des Steckverbinders aus Figur 1,
- Fig. 3: eine perspektivische Ansicht einer Adapterhülse des Steckverbinders aus Figur 1,
- Fig. 4: eine perspektivische Ansicht eines Formschlusselements des Steckverbinders aus Figur 1,
- Fig. 5: eine perspektivische Ansicht eines Haltemittels des Steckverbinders aus Figur 1,
- Fig. 6: eine perspektivische Ansicht eines Verriegelungselements des Steckverbinders aus Figur 1,
- Fig. 7: eine Schnittansicht längs der Montageachse X gemäß Figur 1 durch den Steckverbinder in einer Zwischenstellung des Steckverbinders mit einem teilweise bis zu einem Formschlusselement eingesteckten Gegensteckverbinder,
- Fig. 8: eine Schnittansicht durch den Steckverbinder entlang der Trennlinie A-A gemäß Figur 7,
- Fig. 9: eine Schnittansicht durch den Steckverbinder entlang der Trennlinie B-B gemäß Figur 7,
- Fig. 10: eine Schnittansicht längs der Montageachse X gemäß Figur 1 durch den Steckverbinder in einer Zwischenstellung des Steckverbinders mit einem teilweise bis zu einem Dichtungselement eingesteckten Gegensteckverbinder,
- Fig. 11: eine Schnittansicht durch den Steckverbinder entlang der Trennlinie C-C gemäß Figur 10,
- Fig. 12: eine Schnittansicht durch den Steckverbinder entlang der Trennlinie D-D gemäß Figur 10,
- Fig. 13: eine Schnittansicht längs der Montageachse X gemäß Figur 1 durch den Steckverbinder in einer Montagestellung des Steckverbinders vollständig eingesteckten Gegensteckverbinder,
- Fig. 14: eine Schnittansicht durch den Steckverbinder entlang der Trennlinie E-E gemäß Figur 13,
- Fig. 15: eine Schnittansicht durch den Steckverbinder entlang der Trennlinie G-G gemäß Figur 13 und
- Fig. 16: eine Schnittansicht längs der Montageachse X gemäß Figur 1 durch den Steckverbinder in einer Vormontagestellung ohne einen eingesteckten Gegensteckverbinder.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

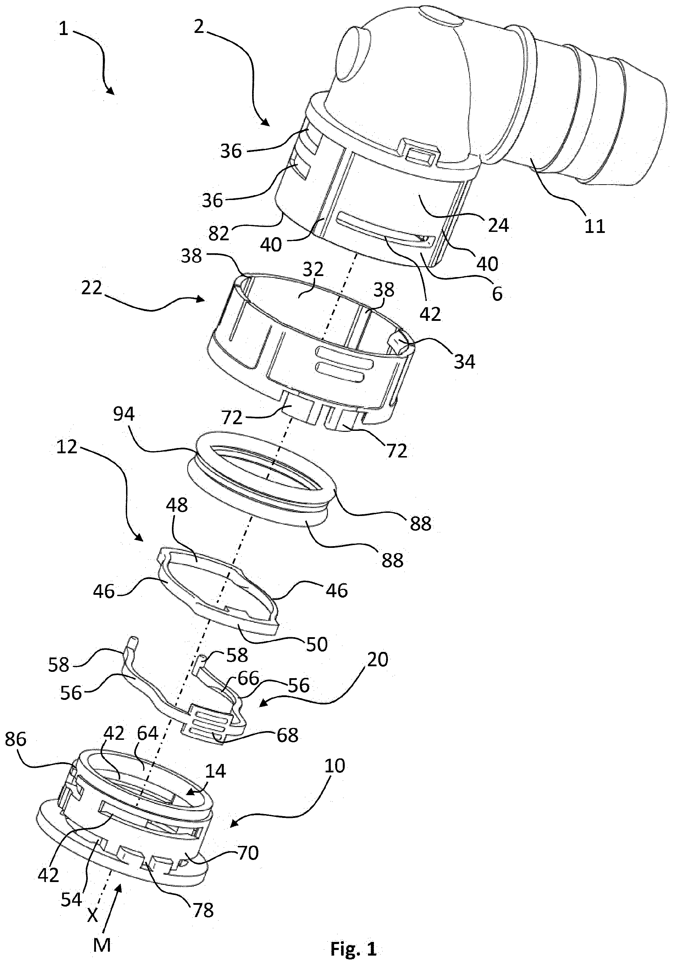

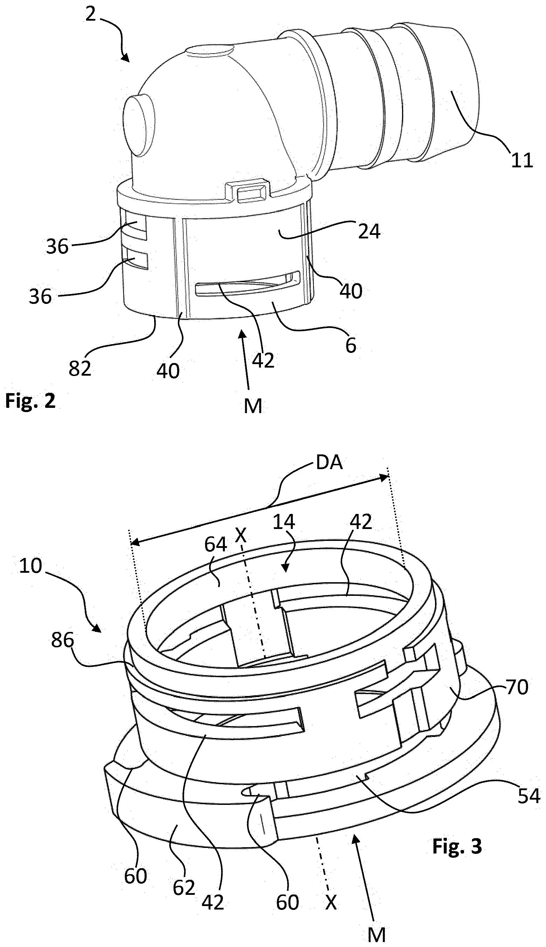

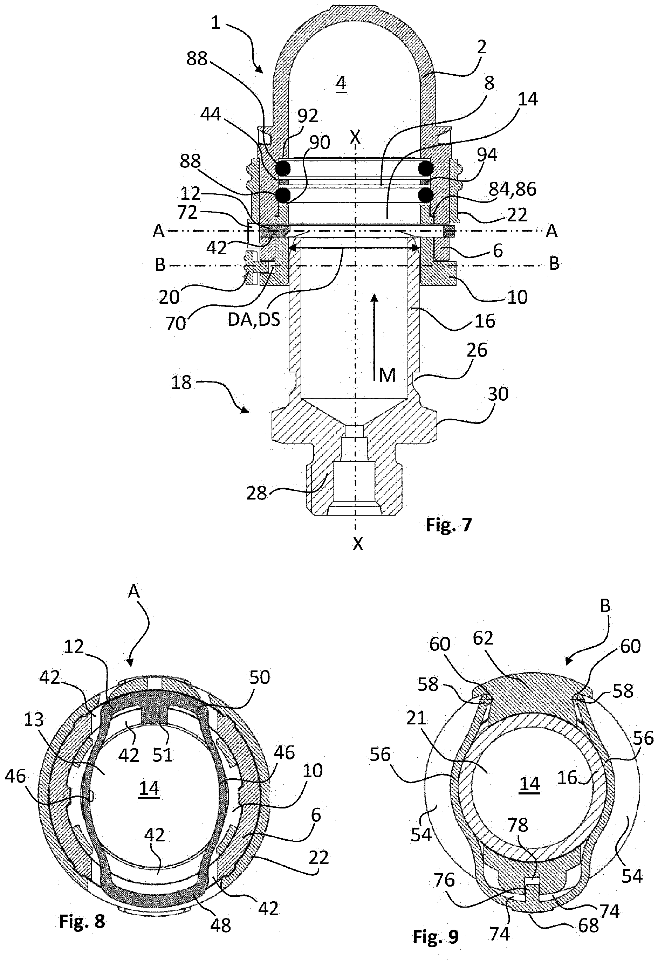

Figur 1 zeigt einen Steckverbinder 1 zum Verbinden von mindestens einer ersten Fluidleitung mit einer mit einem Gegensteckverbinder 18 ausgebildeten zweiten Fluidleitung oder zum Anschluss eines mit einem Gegensteckverbinder 18 ausgebildeten Aggregats. Der Steckverbinder 1 umfasst ein Gehäuse 2, siehe Figuren 1 und 2, mit einem in den Figuren 7, 10 und 13 dargestellten Durchgangskanal 4.

Entsprechend der Darstellung in den Figuren 1 und 2 ist ein Ende des Gehäuses 2 als Muffenabschnitt 6 mit einem fluidisch mit dem Durchgangskanal 4 verbundenen Aufnahmekanal 8 zur Aufnahme einer, in den Figuren 1 und 3 dargestellten, Adapterhülse 10 ausgebildet.

Ebenfalls ist in den Figuren 1 und 2 dargestellt, dass das Gehäuse 2 an dem dem Muffenabschnitt 6 gegenüberliegenden Ende vorzugsweise einen Steckabschnitt 11 z. B. zum Aufstecken der ersten Fluidleitung oder eines Leitungsverbinders aufweist. Dieser Steckabschnitt 11 kann aber auch als eine Muffe zum Einstecken einer Fluidleitung ausgebildet sein. Weiterhin kann das Gehäuse 2 an dem dem Muffenabschnitt 6 gegenüberliegenden Ende einen zweiten Muffenabschnitt aufweisen, welcher eines oder mehrere Merkmale des Muffenabschnitts 6 dieser Erfindung aufweist. Alternativ kann das Gehäuse 2 an dem dem Muffenabschnitt 6 gegenüberliegenden Ende unmittelbar an einem Aggregat angeschlossen bzw. mit diesem kraft- und/oder form- und/oder stoffschlüssig verbunden sein.

Der Steckverbinder 1 kann weiterhin als Winkelsteckverbinder, wie in Figur 1 dargestellt, ausgebildet sein. Alternativ kann der Steckverbinder 1 zwischen dem Muffenabschnitt 6 und dem gegenüberliegenden Ende nicht abgewinkelt sein, oder es können beliebige Winkel zwischen dem Muffenabschnitt 6 und dem gegenüberliegenden Ende ausgebildet sein. Ebenfalls ist ein T-förmiger oder Y-förmiger Steckverbinder 1 möglich. Insbesondere ist hierbei mindestens ein Ende und maximal jedes Ende als Muffenabschnitt 6 ausgebildet.

Die Adapterhülse 10 ist in eine axial zu einer Montageachse X gerichtete Montagerichtung M in den Aufnahmekanal 8 des Muffenabschnitts 6 einsteckbar. Die Figuren 7, 10 und 13 zeigen eine in dem Aufnahmekanal 8 des Muffenabschnitts 6 angeordnete Adapterhülse 10.

Die Adapterhülse 10 ist in den Figuren 1 und 3 dargestellt und ist lösbar in dem Aufnahmekanal 8 in axialer Richtung formschlüssig gehalten. Entsprechend Figur 3 hat die Adapterhülse 10 eine Durchgangsöffnung 14 für einen Steckerschaft 16 des Gegensteckverbinders 18 ausgebildet. Der Gegensteckverbinder 18 ist zur Veranschaulichung der Funktionsweise in den Figuren 7 bis 15 dargestellt.

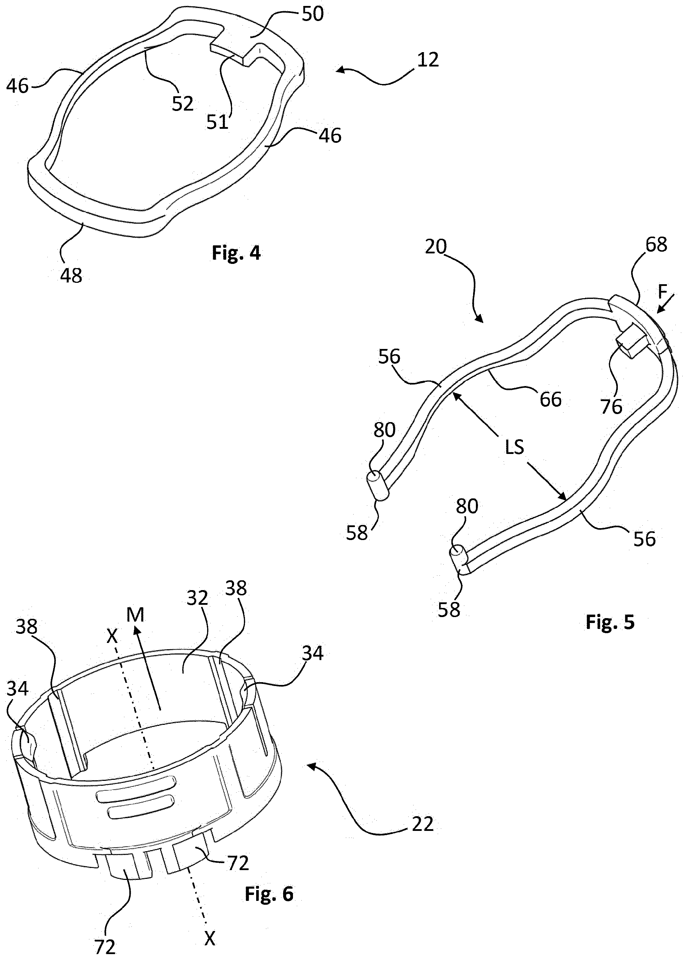

Weiterhin weist die Adapterhülse 10 ein in den Figuren 1 und 5 dargestelltes Haltemittel 20 zum lösbaren Fixieren des Gegensteckverbinders 18 auf, wobei das Haltemittel 20 in einem Ruhezustand in die Durchgangsöffnung 14 hineinragt und radial bezogen auf die Montageachse X elastisch in einen Spannungszustand aufweitbar ausgebildet ist. Die Figuren 7, 9, 10 und 12 zeigen das Haltemittel 20 in einem Spannungszustand. Im Gegensatz dazu ist in den Figuren 5, 13, 15 und 16 das Haltemittel 20 in einem Ruhezustand dargestellt.

Zweckmäßig kann das Haltemittel 20 aus Kunststoff, Metall, Hybridwerkstoff oder einem umspritzten Draht ausgebildet sein.

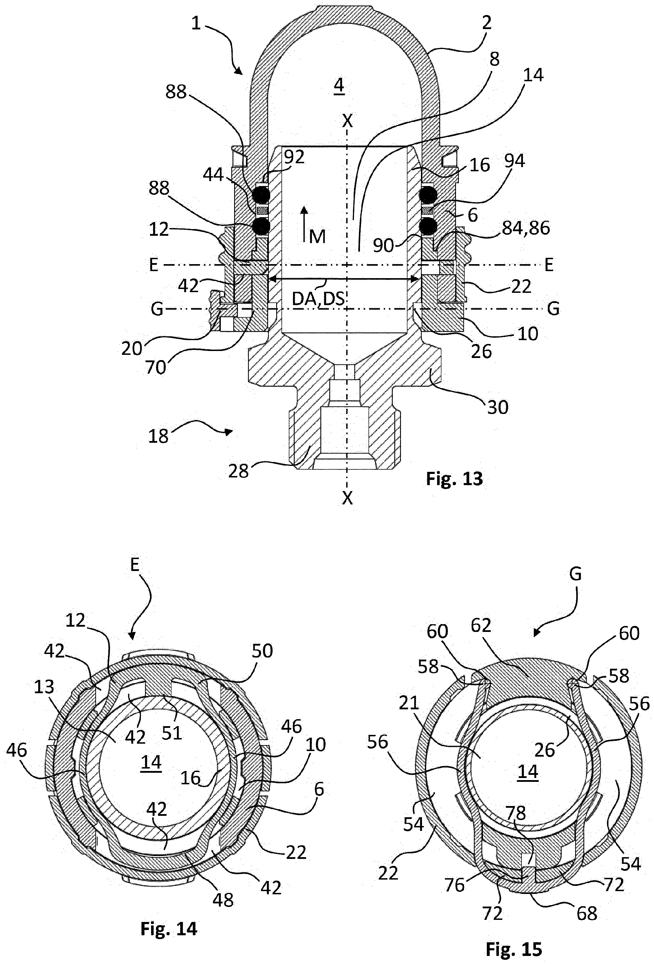

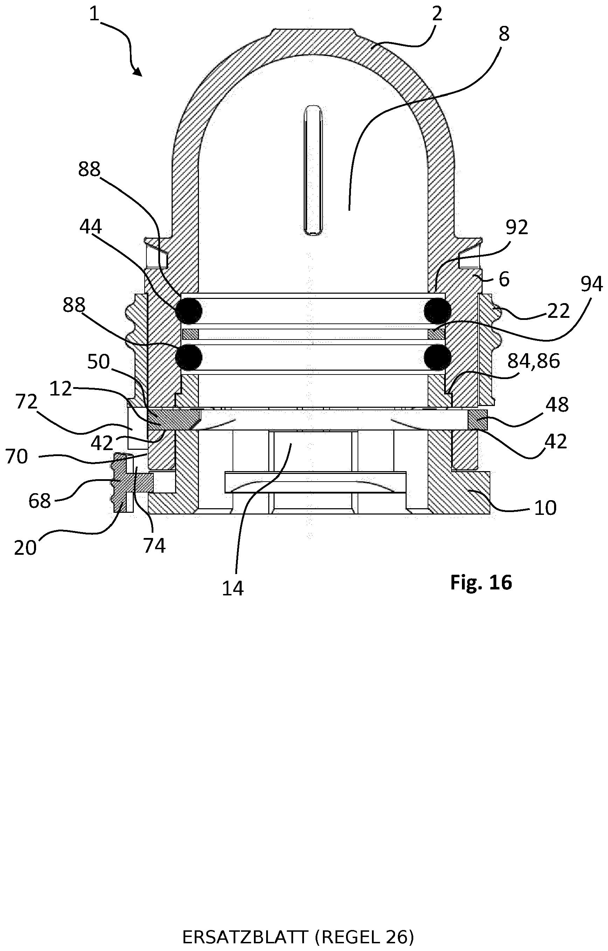

Der Steckerschaft 16 des Gegensteckverbinders 18 ist in einer Vormontagestellung des Steckverbinders 1, entsprechend der Darstellung in Figur 16, in die Durchgangsöffnung 14 der Adapterhülse 10 einführbar, und in einer, in Figur 13 bis 15 dargestellten, Montagestellung des Steckverbinders 1 blockiert das Haltemittel 20 den Gegensteckverbinder 18 axial zur Montageachse X. In den Figuren 7 bis 9 und 10 bis 12 ist der Steckverbinder in zwei Zwischenstellungen mit einem jeweils teilweise eingeführten Gegensteckverbinder 18 dargestellt.

Ein in den Figuren 1 und 6 dargestelltes, axial zur Montageachse X bewegliches Verriegelungselement 22 ist auf einem Außenumfang 24 des Muffenabschnitts 6 von einer das Haltemittel 20 freigebenden Lösestellung in eine das Haltemittel 20 verriegelnde Verriegelungsstellung beweglich angeordnet.

Der Gegensteckverbinder 18 weist in Montagerichtung M betrachtet vor dem Steckerschaft 16 eine Rastnut 26 auf. Vorzugsweise sind sowohl der Steckerschaft 16 als auch die Rastnut 26 zu der Montageachse X zylindrisch ausgebildet.

An dem dem Steckerschaft 16 gegenüberliegenden Ende des Gegensteckverbinders 18 ist ein Anschlussabschnitt 28 zum Anschluss einer Fluidleitung oder eines Aggregats vorgesehen. Zwischen dem Anschlussabschnitt 28 und der Rastnut 26 des Gegensteckverbinders 18 ist zweckmäßigerweise ein Ringbund 30 angeformt, der als Antriebsbereich zum Angriff eines Montagewerkzeugs dienen kann.

Die Länge des Steckerschafts 16 des Gegensteckverbinders 18 ist zweckmäßig derart bemessen, dass dieser im in die Adapterhülse 10 eingesteckten Zustand, wie in Figur 13 dargestellt, sich in Montagerichtung M durch die Adapterhülse 10 hindurch bis in den Aufnahmekanal 8 des Gehäuses 2 erstreckt.

Das Verriegelungselement 22 ist in seiner Lösestellung in der Vormontagestellung des Steckverbinders 1, wie in Figur 16 dargestellt, auf dem Muffenabschnitt 6 zumindest axial zu der Montageachse X gegen eine Bewegung in die Verriegelungsstellung fixiert. Die Lösestellung des Verriegelungselements 22 ist in den Figuren 7, 8, 10, 11 und 16 dargestellt. In dieser Lösestellung ist insbesondere der Steckerschaft 16 nicht oder nur teilweise in die Durchgangsöffnung 14 in Montagerichtung M eingesteckt. Zweckmäßig wird die Überführung in die Verriegelungsstellung erst dann freigegeben, wenn der Steckerschaft 16 des Gegensteckverbinders 18 weit genug axial zur Montageachse X in Montagerichtung M bewegt wurde, insbesondere spätestens, wenn der Steckerschaft 16 des Gegensteckverbinders 18 eine Lage entsprechend der Montagestellung des Steckverbinders 1 gemäß Figur 13 angenommen hat.

In der Montagestellung des Steckverbinders 1 verhindert daraufhin das Verriegelungselement 22, dass sich das Haltemittel 20 elastisch in einen Spannungszustand verformt und sich der Gegensteckverbinder 18 gegen die Montagerichtung M, insbesondere auch in Montagerichtung M, relativ zum Steckverbinder 1 bewegen kann. Insbesondere wird ein Trennen des Gegensteckverbinders 18 vom Steckverbinder 1 verhindert.

Dadurch, dass das Verriegelungselement 22 das Haltemittel 20 nicht blockieren kann, solange das Verriegelungselement 22 in der Lösestellung blockiert wird, wird vermieden, dass das Haltemittel 20 in einer Vormontagestellung ein Einführen des Steckerschafts 16 des Gegensteckverbinders 18 blockiert.

Vorzugsweise ist das Verriegelungselement 22, wie in Figur 6 dargestellt, zylindrisch ausgebildet, wobei das Verriegelungselement 22 vorzugsweise an einer Innenwandung 32 einen Rasthaken 34 ausgebildet hat, welcher in eine korrespondierend ausgebildete Rastnut 36 am Gehäuse 2 eingreifen kann. Dadurch ist das Verriegelungselement 22 insbesondere zumindest in der Lösestellung mittels einer insbesondere kraftformschlüssig ausgebildeten Rastverbindung an dem Gehäuse 2 angeordnet. Vorzugsweise dient die Rastverbindung einer Lagesicherung für den Transport und Lagerung des Steckverbinders 1 und kann mittels einer händischen Kraft gegen die Montagerichtung M auf das Verriegelungselement 22 überwunden werden. Insbesondere weist das Verriegelungselement 22, wie in Figur 6 dargestellt, zwei um 180° um die Montageachse X gegenüberliegend angeordnete Rasthaken 34 auf, wobei das Gehäuse 2 korrespondierend zu den zwei Rasthaken 34 zumindest eine Rastnut 36 für jeden Rasthaken 34 ausgebildet hat. Besonders bevorzugt weist das Gehäuse 2, wie in Figur 2 dargestellt, axial zu der Montageachse X versetzte Rastnuten 36 auf, so dass das Verriegelungselement 22 in verschiedenen Stellungen, insbesondere zumindest in der Lösestellung, rastend an dem Gehäuse 2 angeordnet werden kann.

Vorzugsweise weist das Verriegelungselement 22, wie in Figur 6 dargestellt, an seiner Innenwandung 32 axial zu der Montageachse X verlaufende Führungsnuten 38 auf. Insbesondere wenn das Verriegelungselement 22 auf dem Außenumfang 24 des Muffenabschnitts 6 angeordnet ist, greifen vorteilhaft axial zu der Montageachse X ausgebildete Leitelemente 40 in die Führungsnuten 38 des Verriegelungselements 22 ein und verhindern vorzugsweise ein Verdrehen des Verriegelungselements 22 relativ zum Muffenabschnitt 6 um die Montageachse X.

Ein Formschlusselement 12 fixiert die Adapterhülse 10 in dem Aufnahmekanal 8 in axialer Richtung zur Montageachse X formschlüssig. Dabei ragt das Formschlusselement 12 in einem Ruhezustand in die Durchgangsöffnung 14 hinein, wodurch der Querschnitt der Durchgangsöffnung 14 im Bereich des Formschlusselements 12 verringert ist. Das Formschlusselement 12 ist weiterhin radial bezogen auf die Montageachse X elastisch in einen Spannungszustand aufweitbar ausgebildet.

Zweckmäßig wird eine axiale Bewegung des Verriegelungselements 22 von der Lösestellung in die Verriegelungsstellung von dem Formschlusselement 12 blockiert und erst dann freigegeben, wenn der Steckerschaft 16 des Gegensteckverbinders 18 so weit axial zur Montageachse X in Montagerichtung M bewegt wurde, dass dieser den Bereich des Formschlusselements 12 passiert hat.

Insbesondere weist das Formschlusselement 12 eine, in den Figuren 8, 11 und 14 dargestellte, Durchleitungsöffnung 13 auf, welche vollumfänglich umschlossen ist. Insbesondere ist die Durchleitungsöffnung mittels miteinander verbundenen Klemmarmen 46 und der Adapterhülse 10 vollumfänglich umschlossen. Der Umfang sowie der Flächeninhalt der Durchleitungsöffnung 13 senkrecht zu der Montageachse X ist sowohl im Ruhezustand, als auch im Spannungszustand gleich, sodass die radiale Aufweitung gleichzeitig auch eine, zu der Aufweitung versetzte, radiale Einschnürung zur Folge hat.

Zweckmäßig sind das Formschlusselement 12 und/oder das Haltemittel 20 mittels einer zumindest radial bezogen auf die Montageachse X nach außen wirkenden Kraft aus ihrem jeweiligen Ruhezustand in den Spannungszustand elastisch aufweitbar. Dadurch können das Haltemittel 20 und/oder das Formschlusselement 12 derart korrespondierend zu dem Steckerschaft 16 ausgebildet, insbesondere abgewinkelt, werden, dass beim Bewegen des Steckerschafts 16 in Montagerichtung M durch eine radial auf das Haltemittel 20 und/oder das Formschlusselement 12 einwirkende Kraftkomponente das Haltemittel 20 und/oder das Formschlusselement 12 in deren jeweiligen Spannungszustand elastisch aufgeweitet werden.

Erfindungsgemäß weisen der Muffenabschnitt 6 und die Adapterhülse 10 jeweils zumindest einen in Bezug auf die Montageachse X radialen Durchbruch 42 auf. Die jeweiligen radialen Durchbrüche 42 sind in den Figuren 2 und 3 dargestellt. Vorzugsweise sind zumindest jeweils ein Durchbruch 42 der Adapterhülse 10 und des Muffenabschnitts 6 in einem fixierten Zustand der Adapterhülse 10 im Muffenabschnitt 6 derart benachbart zueinander angeordnet, dass das Formschlusselement 12 radial zur Montageachse X durch die Durchbrüche 42 der Adapterhülse 10 und des Muffenabschnitts 6 in die Durchgangsöffnung 14 der Adapterhülse 10 eingeführt werden kann. Insbesondere wird das Formschlusselement 12 von außerhalb des Gehäuses 2 radial zur Montageachse X in die Durchgangsöffnung 14 eingeführt. Vorzugsweise verhindert das Formschlusselement 12 sowohl eine Verdrehung der Adapterhülse 10 relativ zum Muffenabschnitt 6 um die Montageachse X als auch eine axiale Bewegung der Adapterhülse 10 entlang der Montageachse X relativ zum Muffenabschnitt 6.

Insbesondere weisen der Muffenabschnitt 6 und die Adapterhülse 10 jeweils zwei um 180° gegenüberliegend angeordnete, in Bezug auf die Montageachse X radiale Durchbrüche 42 auf. Eine derartige Ausführung der Adapterhülse 10 und des Muffenabschnitts 6 ist beispielsweise in Figur 3 dargestellt. Das Formschlusselement 12 kann in dieser Ausführung radial zur Montageachse X durch die Durchbrüche 42 in die Durchgangsöffnung 14 des Muffenabschnitts 6 eingeführt werden, wobei das Formschlusselement 12 durch die gegenüberliegenden Durchbrüche 42 in den Muffenabschnitt 6 und die Adapterhülse 10 ragt. Insbesondere sind die Durchbrüche 42 einseitig, wie in den Figuren 8, 11, und 16 dargestellt, von dem Verriegelungselement 22 übergriffen, so dass das Formschlusselement 12 radial in dem übergriffenen Durchbruch 42 angeordnet werden kann und im Spannungszustand eine radiale Bewegung des Formschlusselements 12 durch den übergriffenen Durchbruch 42 mittels des Verriegelungselements 22 blockiert wird. Insbesondere kann sich das Formschlusselement 12 in dieser Ausführung an dem Verriegelungselement 22, welches einseitig die Durchbrüche 42 übergreift, abstützen.

Gemäß einer vorteilhaften Ausführung ragt das Formschlusselement 12 im Ruhezustand radial zur Montageachse X aus dem Durchbruch 42 der Adapterhülse 10 heraus. Zweckmäßig blockiert dadurch das Formschlusselement 12 im Ruhezustand die Bewegung des Verriegelungselements 22 aus der Lösestellung in die Verriegelungsstellung. Insbesondere ist dadurch das Verriegelungselement 22 in der Vormontagestellung des Steckverbinders 1, wie in Figur 16 dargestellt, oder einer Zwischenstellung des Steckverbinders 1, wie in den Figuren 7 und 8 dargestellt, fixiert.

Besonders vorteilhaft ist das Formschlusselement 12, wie in Figur 4 dargestellt, als Verbindungsklammer ausgebildet. Insbesondere hat das Formschlusselement 12 dabei zwei Klemmarme 46 ausgebildet. Zweckmäßig sind die Klemmarme 46 über zumindest eine Brücke 48 einseitig miteinander verbunden. Vorzugsweise ragen die Klemmarme 46 im Ruhezustand des Formschlusselements 12 bzw. der Verbindungsklammer in die Durchgangsöffnung 14 hinein. Insbesondere weisen die Klemmarme 46 zumindest einen Anlageabschnitt 50 auf. Sofern die Klemmarme 46 lediglich einseitig über eine Brücke 48 miteinander verbunden sind, weist jeder Klemmarm 46 an seinem in den Muffenabschnitt 6 hineinragenden Ende einen eigenen Anlageabschnitt 50 auf. Entsprechend einer vorteilhaften Ausführung, siehe Figur 4, sind die Klemmarme 46 über den Anlageabschnitt 50 verbunden. Der Anlageabschnitt 50 ist zweckmäßig, entsprechend den Figuren 8, 11 und 14, in einem Durchbruch 42 in dem Muffenabschnitt 6 angeordnet und wird einseitig, wie in den Figuren 8, 11, 14 und 16 dargestellt, von dem Verriegelungselement 22 übergriffen.

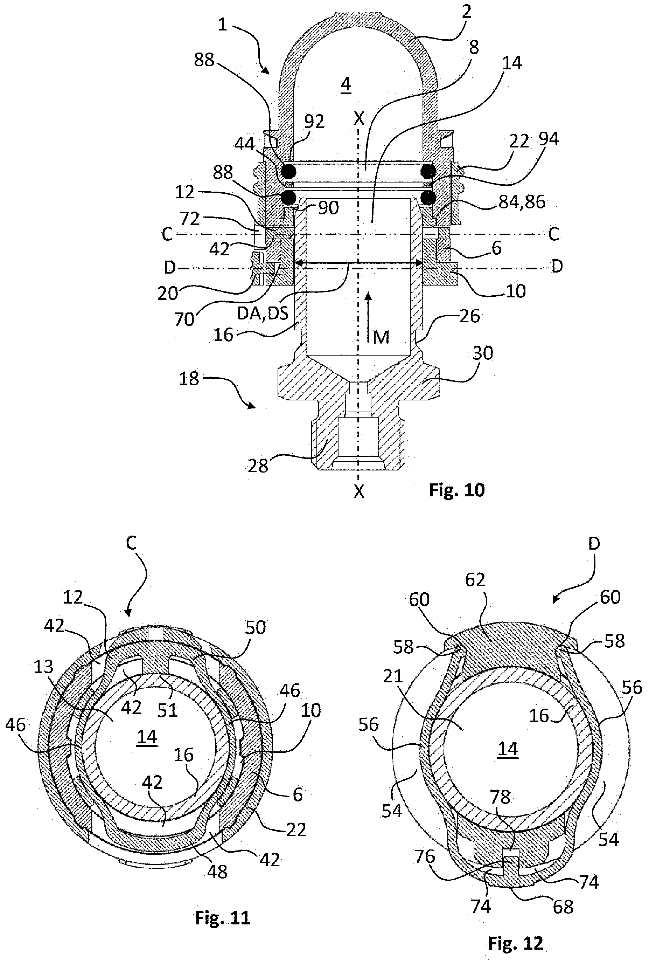

Gemäß einer vorteilhaften Ausführung der Erfindung ist, wie in den Figuren 4, 8, 11 und 14 dargestellt, an dem Anlagenabschnitt 50 ein Abstützelement 51, zweckmäßig monolithisch angeformt, angeordnet. Das Abstützelement 51 ragt vorteilhaft in die Durchgangsöffnung 14 hinein und kann sich insbesondere in einer Montagestellung, siehe Figur 14 oder einer Zwischenstellung, siehe Figuren 11, an dem Steckerschaft 16 des Gegensteckverbinders 18 abstützen. Vorteilhaft begünstigt die radiale Abstützung des Abstützelementes 51, dass das Formschlusselement 12 bei einer radialen Aufweitung der Klemmarme 46 lediglich mit seiner Brücke 48 radial zu der Montageachse X und relativ zum Muffenabschnitt 6 in Richtung der Montageachse elastisch verformt wird. Vorzugsweise bleibt die relative Lage des Anlageabschnitts 50 mittels des Abstützelements 51 zum Muffenabschnitt 6 und/oder zum Gegensteckverbinder 18, wie in den Figuren 8, 11 und 14 dargestellt, vor und nach einer Aufweitung der Klemmarme, d. h. sowohl im Ruhezustand als auch im Spannungszustand des Formschlusselements 12, konstant.

Vorzugsweise sind die Klemmarme 46 derart geformt, dass diese in einem eingebauten Zustand, siehe die Figuren 8, 11 und 14, um die Montageachse X gebogen ausgebildet sind. Die gebogene Form begünstigt, dass der Steckerschaft 16 beim Einstecken in Montagerichtung M eine vergrößerte Auflagefläche mit den Klemmarmen 46 besitzt. Dadurch wird vorteilhaft die radiale elastische Aufweitung der Klemmarme 46 begünstigt.

Weiterhin kann vorteilhaft die im eingebauten Zustand gegen die Montagerichtung M weisende Seite 52 der Klemmarme 46, wie in Figur 4 dargestellt, zumindest teilweise mit einer Abschrägung ausgebildet sein, wobei sich der radiale Abstand der Klemmarme 46 über die Abschrägung in Montagerichtung M verringert. Die Abschrägung erleichtert ein Einführen des Steckerschafts 16 und verbessert eine Kraftumlenkung beim Einführen in Montagerichtung M, indem eine axial wirkende Kraftkomponente mittels der Abschrägung in eine radial zu der Montageachse X nach außen und gegen eine Elastizitätskraft der Klemmarme 46 wirkende Kraft umgelenkt wird.

Insbesondere im Spannungszustand des Formschlusselements 12 verringert sich der Abstand zwischen der Brücke 48 und dem Anlageabschnitt 50 bzw. den Anlageabschnitten 50. Vorteilhaft wird dabei das Formschlusselement 12 vollständig mit dem Außenumfang der Adapterhülse 10 fluchtend in den Durchbruch 42 hineingezogen. Vorteilhaft hat diese Ausführung zur Folge, dass das Verriegelungselement 22 durch den Spannungszustand des Formschlusselements 12 für ein axiales Verschieben freigegeben wird.

Insbesondere ist die radial wirkende Elastizitätskraft der Klemmarme 46 derart ausgeprägt, dass, wenn der Steckerschaft 16 aus einem eingesteckten Zustand gegen die Montagerichtung M aus der Durchgangsöffnung 14 der Adapterhülse 10 gezogen wird, sich die Klemmarme 46 zurückverformen und den Querschnitt der Durchgangsöffnung 14 der Adapterhülse 10 wieder verringern. Mittels der Rückverformung der Klemmarme 46 vergrößert sich des Weiteren der Abstand zwischen der Brücke 48 und dem Anlageabschnitt 50, so dass die Brücke 48 aus dem Durchbruch 42 in dem Muffenabschnitt 6 herausragt und das Verriegelungselement 22 in der Lösestellung blockiert.

Vorzugsweise weist die Adapterhülse 10, wie in Figur 3 dargestellt, zwei um 180° gegenüberliegende, in Bezug auf die Montageachse X radial geöffnete Fenster 54 auf. Die Fenster 54 sind insbesondere axial zur Montageachse X von den Durchbrüchen 42 beabstandet angeordnet. Zweckmäßigerweise sind die Fenster 54 des Weiteren um 90° zu den Durchbrüchen 42 um die Montageachse X versetzt angeordnet. Vorteilhaft dienen die Fenster 54 der Anordnung und Führung des Haltemittels 20.

Gemäß einer Ausführung weist das Haltemittel 20, wie in Figur 5 dargestellt, zwei Haltearme 56 auf. Mit diesen Haltearmen 56 umgreift das Haltemittel 20 die Fenster 54, wie beispielsweise in Figur 9 dargestellt. Im Ruhezustand des Haltemittels 20 ragt dabei das Haltemittel 20 vorzugsweise mit den Haltearmen 56 durch die Fenster 54 in die Durchgangsöffnung 14 der Adapterhülse 10. Insbesondere bildet das Haltemittel 20, wie in den Figuren 9, 12 und 15 dargestellt, eine Durchführungsöffnung 21 mittels miteinander verbundener Haltearme 56 und/oder vorzugsweise mittels Haltearme 56 und der Adapterhülse 10. Der Umfang sowie der Flächeninhalt der Durchführungsöffnung 21 senkrecht zu der Montageachse X sind sowohl im Ruhezustand als auch im Spannungszustand gleich, so dass die radiale Aufweitung gleichzeitig auch eine zu der Aufweitung versetzte, radiale Einschnürung zur Folge hat.

Zweckmäßig weist der Steckerschaft 16 des Gegensteckverbinders 18 einen Durchmesser DS auf, siehe Figur 7, welcher größer ist als der größte Abstand LS der Haltearme 56 senkrecht durch die Montageachse X im Ruhezustand der Haltearme 56, siehe Figur 5. Insbesondere ist eine radial wirkende Elastizitätskraft der Haltearme 56 in Richtung der Montageachse X derart ausgeprägt, dass, wenn der Gegensteckverbinder 18 so weit in Einsteckrichtung in die Durchgangsöffnung 14 der Adapterhülse 10 eingeführt ist, dass die Rastnut 26, wie in den Figuren 13 und 15 dargestellt, benachbart zu den Haltearmen 56 angeordnet ist, die Haltearme 56 sich zurückverformen und wieder in die Durchgangsöffnung 14 der Adapterhülse 10 hineinragen. Dadurch ordnen sich die Haltearme 56 in der Rastnut 26 an und blockieren eine Bewegung des Gegensteckverbinders 18 in und/oder gegen die Montageachse X.

Die Haltearme 56 weisen vorzugsweise zumindest einen Kontaktabschnitt 58 auf, zweckmäßig weisen die Haltearme 56 jeweils einen Kontaktabschnitt 58 auf. Das in Figur 1, 5, 9, 12 und 15 dargestellte Haltemittel 20 entspricht einer vorteilhaften Ausführung und weist zwei Kontaktabschnitte 58 auf. Eine alternative Ausführung mit lediglich einem Kontaktabschnitt 58, welcher die Haltearme 56 verbindet, könnte entsprechend dem Anlagenabschnitt 50 des Formschlusselements 12 in Figur 4 ausgebildet sein.

Vorzugsweise ist der jeweilige Kontaktabschnitt 58 in einer Kontaktnut 60 angeordnet, die in einem Kontaktelement 62, siehe Figur 3, oder in einer Innenwandung 64 der Adapterhülse 10 ausgebildet ist. Besonders vorteilhaft können die Haltearme 56 sich in der Kontaktnut 60 zumindest radial zur Montageachse X abstützen und einhaken und werden dadurch in einer Einbaulage in bzw. an der Adapterhülse 10 gehalten. Zweckmäßig bleibt die relative Lage der Kontaktabschnitte 58 mittels der Kontaktnuten 60, wie in den Figuren 9, 12 und 15 dargestellt, vor und nach einer Aufweitung der Haltearme 56, d. h. sowohl im Ruhezustand als auch im Spannungszustand des Formschlusselements 12, konstant. Zweckmäßig weisen die Haltearme 56 jeweils einen Kontaktabschnitt 58, wie in Figur 5 dargestellt, auf und sind insbesondere in zwei in Umfangsrichtung geöffneten Kontaktnuten 60, entsprechend den Figuren 9, 12 und 15, angeordnet, welche in dem Kontaktelement 62 ausgebildet sind.

Vorzugsweise bildet die Kontaktnut 60 bzw. bilden die Kontaktnuten 60 eine Klemmverbindung für die Haltearme 56 bzw. den Kontaktabschnitt 58. Die Klemmverbindung ermöglicht sowohl, dass sich die Haltearme 56 radial zur Montageachse X in den Kontaktnuten 60 abstützen können, als auch dass ein Trennen und Herausfallen des Haltemittels 20 aus der Adapterhülse 10 vermieden wird.

Vorzugsweise weist der jeweilige Kontaktabschnitt 58 mindestens einen axial in Montagerichtung M hervorstehenden Stift 80 auf, welcher in eine zu dem Stift 80 korrespondierend ausgebildete Bohrung in einer gegen die Montagerichtung M weisenden Stirnfläche 82 des Muffenabschnitts 6 eingreifen kann. Der Stift 80 ist in Figur 5 dargestellt. Der jeweilige Stift 80 ist vorteilhaft radial zu der Montagerichtung M formschlüssig in der Bohrung angeordnet und sichert insbesondere die Lage des Haltemittels 20 bzw. des jeweiligen Kontaktabschnitts 58 in der jeweiligen Kontaktnut 60. Alternativ weist in einer nicht dargestellten Ausführung der Kontaktabschnitt 58 einen gegen die Montagerichtung M weisenden Stift auf, welcher in eine Bohrung in der Adapterhülse 10 eingreifen kann. Gemäß einem weiteren nicht dargestellten Beispiel weisen die Adapterhülse 10 und/oder der Muffenabschnitt 6, in Richtung des Kontaktabschnitts 58 weisend, einen Stift auf, welcher in eine Bohrung eingreift, die in dem jeweiligen Kontaktabschnitt 58 ausgebildet ist.

Vorzugsweise sind die Haltearme 56, wie auch insbesondere die Klemmarme 46, derart geformt, dass diese in einem eingebauten Zustand, siehe die Figuren 9, 12 und 15, um die Montageachse X gebogen ausgebildet sind. Die gebogene Form begünstigt, wie auch zu den Klemmarmen 46 beschrieben, dass der Steckerschaft 16 beim Einstecken in Montagerichtung M eine vergrößerte Auflagefläche mit den Haltearmen 56 besitzt. Dadurch wird vorteilhaft die radiale elastische Verformung der Haltearme 56 begünstigt.

Weiterhin hat die um die Montageachse X gebogene Form der Haltearme 56 den Vorteil, dass in einem Montagezustand mit vollständig eingestecktem und von dem Haltemittel 20 fixiertem Gegensteckverbinder 18, siehe Figur 13, einem ungewollten Lösen, insbesondere bei Vibrationen, besser vorgebeugt wird. Dadurch, dass die Haltearme 56 um die Montageachse X gebogen ausgebildet sind, vergrößert sich die Auflagefläche in und gegen die Montagerichtung M der Haltearme 56 in der Rastnut 26 des Gegensteckverbinders 18. Die vergrößerte Auflagefläche erschwert eine Bewegung des Gegensteckverbinders 18 in oder gegen die Montagerichtung M bzw. ein ungewolltes Trennen des Gegensteckverbinders 18 von dem Steckverbinder 1.

Entsprechend der Ausführung des Formschlusselements 12 kann die im eingebauten Zustand gegen die Montagerichtung M weisende Seite 66 der Haltearme 56 zumindest teilweise, wie in Figur 5 dargestellt, mit einer Abschrägung ausgebildet sein. Wie beschrieben wird dadurch ein Einführen des Gegensteckverbinders 18 und das radiale Aufweiten der Haltearme 56 verbessert.

Vorteilhaft steht das Haltemittel 20 radial zur Montageachse X mit einem Betätigungsmittel 68, wie in den Figuren 7 und 9, 10 und 12 sowie 13, 15 und 16 dargestellt, von einem Außenumfang 70 der Adapterhülse 10 ab. Insbesondere ist der maximale radiale Abstand des Betätigungsmittels 68 zu einem Außenumfang 70 der Adapterhülse 10 im Ruhezustand größer als im Spannungszustand.

Gemäß einer bevorzugten Ausführung kann durch eine von außen radial zu der Montageachse X auf das Betätigungsmittel 68 wirkende, in Figur 5 gekennzeichnete, Kraft F das Haltemittel 20 aus dem Ruhezustand in den aufgeweiteten Spannungszustand elastisch verformt werden. Dafür ist das Betätigungsmittel 68 gegenüberliegend zu der Kontaktnut 60 vorzugsweise derart angeordnet, dass die Kontaktnut 68 in einer Ebene des Kraftflusses der Kraft F liegt. Insbesondere stützt sich das Haltemittel 20 durch die radial auf das Betätigungsmittel 68 wirkende Kraft F mit dem/den Kontaktabschnitt(en) 58 in der/den Kontaktnut(en) 60 ab. Dabei wird das Haltemittel 20 zwischen dem/den Kontaktabschnitt(en) 58 und dem Betätigungsmittel 68 gestaucht. Die Stauchung bewirkt eine Vergrößerung des Abstands zwischen den Haltearmen 56. Zweckmäßig ist der radiale Abstand zwischen den Haltearmen 56 im Spannungszustand bzw. im gestauchten Zustand mindestens so groß wie der Durchmesser DS des Steckerschafts 16. Dies ermöglicht entsprechend Figur 13, dass, wenn im Montagezustand das Haltemittel 20 sich im Ruhezustand befindet und in der Rastnut 26 des Gegensteckverbinders 18 angeordnet ist und den Gegensteckverbinder 18 fixiert, die axiale Bewegung des Gegensteckverbinders 18 zu der Montageachse X aktiv von außen mittels der radialen Kraft F freigegeben werden kann.

Vorteilhaft bewirkt die Verringerung des Abstands zwischen den Kontaktabschnitten 58 und dem Betätigungsmittel 68 im Spannungszustand des Haltemittels 20 eine Verringerung des radialen Abstands des Betätigungsmittels 68 zum Außenumfang 70 der Adapterhülse 10, da das Haltemittel 20 einseitig mit den Kontaktabschnitten 58 in den Kontaktnuten 60 geklemmt angeordnet ist. Dadurch hat der Monteur eine Kontrollmöglichkeit über den Montagezustand des Steckverbinders 1.

Insbesondere wird die Sicherheit und Einsteckkontrolle dadurch verbessert, dass das Haltemittel 20 im Spannungszustand insbesondere mit dem Betätigungsmittel 68 die Bewegung des Verriegelungselements 22 von der Lösestellung in die Verriegelungsstellung blockiert. Solange sich das Haltemittel 20 im Spannungszustand befindet, ist der Gegensteckverbinder 18 nicht weit genug in Montagerichtung M in die Durchgangsöffnung 14 der Adapterhülse 10 eingeführt und der Steckverbinder 1 befindet sich, entsprechend den Figuren 10 bis 12, noch in einer Zwischenstellung.

In der Zwischenstellung des Steckverbinders 1 ist insbesondere das Halteelement 20 und/oder das Formschlusselement 12 derart radial aufgeweitet, dass die Bewegung des Verriegelungselements 22 in die Verriegelungsstellung von dem Halteelement 20 und/oder dem Formschlusselement 12 blockiert wird. Insbesondere ist das Formschlusselement 12 derart radial aufgeweitet, dass es die Bewegung des Verriegelungselements 22 in die Verriegelungsstellung nicht blockiert, wobei das Haltemittel 20 allerdings insbesondere noch an dem Steckerschaft 16 des Gegensteckverbinders 18 anliegt und sich im Spannungszustand befindet. Das hat zur Folge, dass das Verriegelungselement 22 nicht endgültig in die Verriegelungsstellung überführt werden kann.

Gemäß einer Ausführung der Erfindung greift das Verriegelungselement 22 mit mindestens einem axial von dem Verriegelungselement 22 gegen die Montagerichtung M hervorstehenden Dorn 72 im Montagezustand in einen Freiraum 74 hinein. Der Freiraum 74 ist zweckmäßig axial zwischen dem Betätigungsmittel 68 und der Adapterhülse 10 durchführend ausgebildet. Das Verriegelungselement 22, welches in einer vorteilhaften Ausführung in Figur 6 dargestellt ist, weist insbesondere zwei Dorne 72 auf. Die Freiräume 74 sind beispielhaft in den Figuren 9 und 12 gekennzeichnet. Das Verriegelungselement 22 fixiert, wenn der bzw. die Dorne 72 in den bzw. die Freiräume 74 greifen, das Haltemittel 20 radial zu der Montageachse X im Ruhezustand.

Insbesondere sind die Freiräume 74 derart abhängig von dem Spannungszustand bzw. Ruhezustand des Haltemittels 20 ausgebildet, dass das Verriegelungselement 22 mit den Dornen 72 lediglich in die Freiräume 74 eingreifen kann, wenn das Haltemittel 20, wie in Figur 15 dargestellt, im Ruhezustand und der Gegensteckverbinder 18 vollständig in der Durchgangsöffnung 14 der Adapterhülse 10 eingesteckt ist. Aus der genannten Ausführung ergibt sich für den Monteur eine zusätzliche Steckkontrolle und verringert die Gefahr der Fehlmontage.

In einer weiteren Ausführung weist das Haltemittel 20 Führungsmittel 76, wie in Figur 5 dargestellt, auf. Die Führungsmittel 76 wirken insbesondere derart mit zumindest einer an der Adapterhülse 10 ausgebildeten Führungsnut 78 zusammen, dass das Haltemittel 20 eine nicht senkrecht zur Montageachse X, von außen auf das Betätigungsmittel 68 wirkende Kraft F in eine senkrecht zur Montageachse X wirkende Kraft F umlenkt. Besonders vorteilhaft teilt das Führungsmittel 76 einen Freiraum 74 in zwei Freiräume 74, wie in Figur 15 dargestellt, auf.

Vorzugsweise ist das Führungsmittel 76 als ein radial zu der Montageachse X weisender Stift am Betätigungsmittel 68 ausgebildet, welcher, wie in den Figuren 9, 12 und 15 dargestellt, in eine korrespondierend ausgebildete Führungsnut 78 am Außenumfang 70 der Adapterhülse 10 eingreift.

Wie in den Figuren 7, 10 und 13 dargestellt, ist der Aufnahmekanal 8 des Muffenabschnitts 6 vorteilhaft in zylindrische Abschnitte unterteilt, wobei die Durchmesser der jeweiligen Abschnitte gegen die Montagerichtung M zunehmen.

Insbesondere weist der Aufnahmekanal 8 eine ringförmige erste Stufenfläche 84 zwischen einem ersten und einem zweiten zylindrischen Abschnitt auf. Zweckmäßig dient diese erste Stufenfläche 84 als eine Einsteckbegrenzung, welche die Einstecktiefe der Adapterhülse 10 in Montagerichtung M begrenzt. Hierbei weist die Adapterhülse 10 insbesondere eine ebenfalls ringförmige und korrespondierend zu der Stufenfläche ausgebildete Auflagefläche 86 auf, welche in die Montagerichtung M weist. Im eingesetzten Zustand der Adapterhülse 10 in den Aufnahmekanal 8 liegt die Adapterhülse 10 mit der Auflagefläche 86 auf der ersten Stufenfläche 84 auf.

Besonders vorteilhaft ist, wie in den Figuren 7, 10, 13 und 15 abgebildet, wenn in dem Aufnahmekanal 8 mindestens ein Dichtungselement 88, insbesondere ein O-Ring, angeordnet ist. Vorzugsweise sind zwei Dichtungselemente 88 in dem Aufnahmekanal 8 angeordnet. Das Dichtungselement 88 ist zweckmäßig zwischen einer in Montagerichtung M weisenden Seitenwand 90 der Adapterhülse 10 und einer gegen die Montagerichtung M weisenden und sich senkrecht von einer Innenwandung 44 des Aufnahmekanals 8 erstreckenden zweiten Stufenfläche 92 angeordnet. Vorteilhaft dichtet das Dichtungselement 88 gegen eine Innenwandung 44 des Aufnahmekanals 8 ab.

Gemäß einer vorteilhaften Ausführung reduziert die zweite Stufenfläche 92 den Durchmesser des Aufnahmekanals 8 auf den Durchmesser DA der Durchgangsöffnung 14 der Adapterhülse 10.

Besonders vorteilhaft dient das Dichtungselement 88 einer umfangsgemäßen Abdichtung des Steckerschafts gegenüber dem Muffenabschnitt 6 bzw. der Innenwandung 44 des Aufnahmekanals 8.

Besonders vorteilhaft hat sich eine dreiteilige Dichtung bewiesen, welche beispielhaft in Figur 1 perspektivisch dargestellt ist. Insbesondere ist die Verwendung dieser dreiteiligen Dichtung erst durch den erfindungsgemäßen Steckverbinder 1 möglich, da die Erfindung die Verwendung einer gegenüber dem Stand der Technik axial zur Montageachse X kürzeren Adapterhülse 10 ermöglicht.

Die Dichtung weist demnach vorteilhaft zwei Dichtungselemente 88, insbesondere O-Ringe, auf, welche mit einem Distanzring 94 voneinander getrennt sind. Dieser dreiteilige Verbund wird entsprechend der zuvor genannten Art in der Durchgangsöffnung 14 montiert.

Nachfolgend wird ein bevorzugter Einsteckvorgang des Gegensteckverbinders 18 und die Stellungen des Steckverbinders 1 anhand der Figuren 7, 10, 13 und 16 sowie deren jeweilige Schnittansichten 8, 9, 11, 12, 14 und 15 zusammenfassend erläutert.

In der Vormontagestellung ist der Gegensteckverbinder 18, wie in Figur 16 dargestellt, noch nicht in die Durchgangsöffnung 14 eingeführt. Sowohl das Haltemittel 20 als auch das Formschlusselement 12 befinden sich im Ruhezustand. Das Verriegelungselement 22 ist in der Lösestellung und wird von der einseitig aus dem Durchbruch 42 ragenden Brücke 48 des Formschlusselements 12 gegen eine Bewegung in die Verriegelungsstellung blockiert. Anderseitig stützt sich das Formschlusselement 12 mit dem Anlageabschnitt 50 an dem Verriegelungselement 22, insbesondere am Dorn 72, ab. Das Halteelement 20 steht dabei mit dem Betätigungsmittel 68 mit einem derart radialen Abstand zum Außenumfang 70 der Adapterhülse 10 ab, dass die Freiräume 74 geöffnet sind.

In einer Zwischenstellung des Steckverbinders 1, welche in den Figuren 7 bis 9 dargestellt ist, ist der Gegensteckverbinder 18 in Montagerichtung M bis in den Bereich des Haltemittels 20 teileingesteckt. Das Haltemittel 20 befindet sich dabei durch den Steckerschaft 16 in einem radial aufgeweiteten Spannungszustand. Der Betätigungsabschnitt 68 des Haltemittels 12 ist radial eingezogen, wodurch die Freiräume 74 für ein Eindringen der Dorne 72 geschlossen sind. Das Formschlusselement 12 befindet sich derweil weiterhin im Ruhezustand und blockiert das Verriegelungselement 22 weiterhin in der Lösestellung.

In einer weiteren Zwischenstellung des Steckverbinders 1, welche in den Figuren 10 bis 12 dargestellt ist, ist der Gegensteckverbinder 18 weiter in Montagerichtung M bis in den Bereich des Formschlusselements 12 teileingesteckt. Das Formschlusselement 12 ist dabei von dem Steckerschaft 16 in den Spannungszustand radial aufgeweitet. Dabei stützt sich das Formschlusselement 12 einseitig mit dem Abstützelement 51 am Steckerschaft 16 ab, wodurch die Brücke 48 vollständig mit dem Außenumfang der Adapterhülse 10 fluchtend in dem Durchbruch 42 hineingezogen ist. Die axiale Verschiebung des Verriegelungselements 22 von der Lösestellung in die Verriegelungsstellung ist dabei vorzugsweise weiterhin nicht oder insbesondere nur geringfügig möglich. Das Haltemittel 20 befindet sich weiterhin wie zuvor beschrieben in dem radial aufgeweiteten Spannungszustand. Die Freiräume 74 sind daher für ein Eindringen der Dorne 72 geschlossen. Die Dorne 72 liegen vorzugsweise weiterhin an dem Betätigungsmittel 68 an oder kommen bei einer axialen Verschiebung des Verriegelungselements 22 an dem Betätigungsmittel 68 zur Anlage, wodurch in beiden Fällen ein weiteres Verschieben in die Verriegelungsstellung blockiert ist.

In den Figuren 13 bis 15 ist die Montagestellung des Steckverbinders 1 dargestellt. Dabei ist der Gegensteckverbinder 18 vollständig und montagerichtig in die Montagerichtung M eingesteckt. Das Formschlusselement 12 befindet sich weiterhin im Spannungszustand und die Blockade des Formschlusselements 12 für das Verriegelungselement 22 ist aufgehoben. Die Rastnut 26 des Gegensteckverbinder 18 befindet sich nun im Bereich des Haltemittels 20, wodurch dieses wiederum elastisch zurück in den Ruhezustand übergegangen ist und in die Rastnut 26 ragt. Der Gegensteckverbinder 18 ist dadurch gegen ein axiales Verschieben gesichert. Durch die Ruhstellung des Haltemittels 20 hat sich der radiale Abstand des Betätigungsmittels 68 zum Außenumfang 70 der Adapterhülse 10 erneut vergrößert, wodurch die Blockade für das Verriegelungselement 22 wieder aufgehoben wurde. Das Verriegelungselement 22 kann daher vollständig axial zur Montageachse X in die Verriegelungsstellung verschoben werden und mit den Dornen 72 in die Freiräume 74 eintauchen. In dieser Montagestellung blockiert das Verriegelungselement das Haltemittel 22 am Betätigungsmittel 68 gegen radiales Verschieben und somit gegen ungewolltes Aufweiten in den Spannungszustand des Haltemittels 20.

Das Einsteckbeispiel verdeutlicht, dass die Dorne 72 im Prinzip eine dreifache Funktion haben. Zum einen dienen sie als Anlage- und/oder Stützfläche für den Anlageabschnitt 50 des Formschlusselements 12, wodurch sich das Formschlusselement 12 definiert nur an einer Seite einzieht. Zum anderen blockieren die Dorne 72 die axiale Verschiebung des Verrieglungselementes 22 an dem Betätigungsabschnitt 68. In einem weiteren Aspekt blockieren die Dorne 72 das Halteelement 20 in dem Ruhezustand und verhindern ein versehentliches Lösen des Gegensteckverbinders 18.

Die Erfindung ist nicht auf die dargestellten und beschriebenen Ausführungsbeispiele beschränkt, sondern umfasst auch alle im Sinne der Erfindung gleichwirkenden Ausführungen.

### Bezugszeichenliste

- 1: Steckverbinder
- 2: Gehäuse
- 4: Durchgangskanal
- 6: Muffenabschnitt
- 8: Aufnahmekanal
- 10: Adapterhülse
- 11: Steckabschnitt
- 12: Formschlusselement/Verbindungsklammer
- 13: Durchleitungsöffnung
- 14: Durchgangsöffnung
- 16: Steckerschaft
- 18: Gegensteckverbinder
- 20: Haltemittel
- 21: Durchführungsöffnung
- 22: Verriegelungselement
- 24: Außenumfang des Muffenabschnitts
- 26: Rastnut des Gegensteckverbinders
- 28: Anschlussabschnitt
- 30: Ringbund
- 32: Innenwandung des Verriegelungselements
- 34: Rasthaken
- 36: Rastnut am Gehäuse
- 38: Führungsnut
- 40: Leitelement
- 42: Durchbruch
- 44: Innenwandung des Aufnahmekanals
- 46: Klemmarm
- 48: Brücke
- 50: Anlageabschnitt
- 51: Abstützelement
- 52: Gegen die Montagerichtung weisende Seite der Klemmarme
- 54: Fenster
- 56: Haltearm
- 58: Kontaktabschnitt
- 60: Kontaktnut
- 62: Kontaktelement
- 64: Innenwandung der Adapterhülse
- 66: gegen die Montagerichtung weisende Seite der Haltearme
- 68: Betätigungsmittel
- 70: Außenumfang der Adapterhülse
- 72: Dorn
- 74: Freiraum
- 76: Führungsmittel
- 78: Führungsnut
- 80: Stift
- 82: Stirnfläche des Muffenabschnitts
- 84: Erste Stufenfläche
- 86: Auflagefläche
- 88: Dichtungselement
- 90: Seitenwand der Adapterhülse
- 92: Zweite Stufenfläche
- 94: Distanzring

- F: Auf das Haltemittel wirkende Kraft

- M: Montagerichtung
- X: Montageachse

- DA: Durchmesser der Durchgangsöffnung
- DS: Durchmesser des Steckerschafts
- LS: Abstand der Haltearme

## Patentansprüche

1. Steckverbinder (1) zum Verbinden von mindestens einer ersten Fluidleitung mit einer mit einem Gegensteckverbinder (18) ausgebildeten zweiten Fluidleitung oder zum Anschluss eines mit einem Gegensteckverbinder (18) ausgebildeten Aggregats, umfassend eine Adapterhülse (10) und ein Gehäuse (2) mit einem Durchgangskanal (4), wobei ein Ende des Gehäuses (2) als Muffenabschnitt (6) mit einem fluidisch mit dem Durchgangskanal (4) verbundenen Aufnahmekanal (8) zur Aufnahme der Adapterhülse (10) ausgebildet ist,
wobei die Adapterhülse (10) in eine axial zu einer Montageachse (X) gerichtete Montagerichtung (M) in den Aufnahmekanal (8) des Muffenabschnitts (6) einsteckbar ist und lösbar in dem Aufnahmekanal (8) in axialer Richtung formschlüssig gehalten ist, wobei die Adapterhülse (10) eine Durchgangsöffnung (14) für einen Steckerschaft (16) des Gegensteckverbinders (18) ausgebildet hat und ein Haltemittel (20) zum lösbaren Fixieren des Gegensteckverbinders (18) aufweist, wobei das Haltemittel (20) in einem Ruhezustand in die Durchgangsöffnung (14) hineinragt und radial bezogen auf die Montageachse (X) elastisch in einen Spannungszustand aufweitbar ausgebildet ist, und der Steckerschaft (16) des Gegensteckverbinders (18) in einer Vormontagestellung des Steckverbinders (1) in die Durchgangsöffnung (14) der Adapterhülse (10) einführbar ist und in einer Montagestellung des Steckverbinders (1) das Haltemittel (20) den Gegensteckverbinder (18) axial zur Montageachse (X) blockieren kann, wobei ein axial zur Montageachse (X) bewegliches Verriegelungselement (22) auf einem Außenumfang (24) des Muffenabschnitts (6) von einer das Haltemittel (20) freigebenden Lösestellung in eine das Haltemittel (20) verriegelnde Verriegelungsstellung beweglich angeordnet ist, wobei das Verriegelungselement (22) in seiner Lösestellung in der Vormontagestellung des Steckverbinders (1) auf dem Muffenabschnitt (6) zumindest axial gegen eine Bewegung in die Verriegelungsstellung fixiert ist, wobei ein Formschlusselement (12) die Adapterhülse (10) in dem Aufnahmekanal (8) in axialer Richtung zur Montageachse (X) formschlüssig fixiert und in einem Ruhezustand in die Durchgangsöffnung (14) hineinragt und radial bezogen auf die Montageachse (X) elastisch in einen Spannungszustand aufweitbar ausgebildet ist,
**dadurch gekennzeichnet, dass** der Muffenabschnitt (6) und die Adapterhülse (10) jeweils zumindest einen in Bezug auf die Montageachse (X) radialen Durchbruch (42) aufweisen, wobei zumindest jeweils ein Durchbruch (42) der Adapterhülse (10) und des Muffenabschnitts (6) in einem fixierten Zustand der Adapterhülse (10) im Muffenabschnitt (6) derart benachbart zueinander angeordnet sind, dass das Formschlusselement (12) radial zur Montageachse (X) durch die Durchbrüche (42) der Adapterhülse (10) und des Muffenabschnitts (6) hindurch in die Durchgangsöffnung (14) der Adapterhülse (10) eingeführt werden kann.

2. Steckverbinder (1) nach Anspruch 1,
**dadurch gekennzeichnet, dass** das Formschlusselement (12) im Ruhezustand radial zur Montageachse (X) aus dem Durchbruch (42) der Adapterhülse (10) herausragt, wodurch das Formschlusselement (12) im Ruhezustand die Bewegung des Verriegelungselements (22) aus der Lösestellung in die Verriegelungsstellung blockiert.

3. Steckverbinder (1) nach Anspruch 1 oder 2,
**dadurch gekennzeichnet, dass** das Formschlusselement (12) als Verbindungsklammer ausgebildet ist und zwei Klemmarme (46) ausgebildet hat, welche im Ruhezustand in die Durchgangsöffnung (14) hineinragen, wobei die Klemmarme (46) zumindest einen Anlageabschnitt (50) aufweisen, insbesondere über den Anlageabschnitt (50) verbunden sind, wobei der Anlageabschnitt (50) in einem Durchbruch (42) in dem Muffenabschnitt (6) angeordnet und einseitig von dem Verriegelungselement (22) übergriffen ist.

4. Steckverbinder (1) nach Anspruch 3,
**dadurch gekennzeichnet, dass** an dem Anlagenabschnitt (50) ein Abstützelement (51) angeordnet ist, welches in die Durchgangsöffnung (14) hineinragt und sich insbesondere in einer Montagestellung an dem Steckerschaft (16) des Gegensteckverbinders (18) abstützen kann.

5. Steckverbinder (1) nach einem der Ansprüche 1 bis 4,
**dadurch gekennzeichnet, dass** die Adapterhülse (10) zwei sich um 180° gegenüberliegende, in Bezug auf die Montageachse (X) radial geöffnete Fenster (54) aufweist, welche axial zur Montageachse (X) von den Durchbrüchen (42) beabstandet angeordnet und insbesondere um 90 ° zu den Durchbrüchen (42) um die Montageachse (X) versetzt angeordnet sind, wobei das Haltemittel (20) zwei Haltearme (56) aufweist, mit welchen es die Fenster (54) umgreift und im Ruhezustand mit den Haltearmen (56) durch die Fenster (54) in die Durchgangsöffnung (14) der Adapterhülse (10) hineinragt.

6. Steckverbinder (1) nach Anspruch 5,
**dadurch gekennzeichnet, dass** die Haltearme (56) zumindest einen Kontaktabschnitt (58) aufweisen, wobei der Kontaktabschnitt (58) in einer Kontaktnut (60) angeordnet ist, die in einem Kontaktelement (62) oder einer Innenwandung (64) der Adapterhülse (10) ausgebildet ist, vorzugsweise weisen die die Haltearme (56) jeweils einen Kontaktabschnitt (58) auf und sind insbesondere in zwei in Umfangsrichtung geöffnete Kontaktnuten (60) angeordnet, welche in dem Kontaktelement (62) ausgebildet sind, wobei die Haltearme (56) sich mit zumindest einen Kontaktabschnitt (58) in der Kontaktnut (60) radial zur Montageachse (X) abstützen und einhaken können und dadurch in einer Einbaulage in bzw. an der Adapterhülse (10) gehalten werden.

7. Steckverbinder (1) nach einem der Ansprüche 1 bis 6,
**dadurch gekennzeichnet, dass** das Haltemittel (20) radial zur Montageachse (X) mit einem Betätigungsmittel (68) von einem Außenumfang (70) der Adapterhülse (10) absteht, wobei der maximale radiale Abstand des Betätigungsmittels (68) zu einem Außenumfang (70) der Adapterhülse (10) im Ruhezustand größer ist als im Spannungszustand.

8. Steckverbinder (1) nach Anspruch 7,
**dadurch gekennzeichnet, dass** durch eine von außen radial auf das Betätigungsmittel (68) wirkende Kraft (F) das Haltemittel (20) aus dem Ruhezustand in den aufgeweiteten Spannungszustand elastisch verformt werden kann, wobei das Betätigungsmittel (68) gegenüberliegend zu der Kontaktnut (60) angeordnet ist, und sich das Haltemittel (20) radial zur Montageachse (X) mit dem Kontaktabschnitt (58) in der Kontaktnut (60) abstützt.

9. Steckverbinder (1) nach Anspruch 7 oder 8,
**dadurch gekennzeichnet, dass** das Haltemittel (20) im Spannungszustand, insbesondere mit dem Betätigungsmittel (68), die Bewegung des Verriegelungselements (22) von der Lösestellung in die Verriegelungsstellung blockiert.

10. Steckverbinder (1) nach Anspruch 8 oder 9,
**dadurch gekennzeichnet, dass** das Verriegelungselement (22) mit mindestens einem axial von dem Verriegelungselement (22) gegen die Montagerichtung (M) hervorstehenden Dorn (72) in einem Montagezustand durch einen axial zwischen dem Betätigungsmittel (68) des Haltemittels (20) und der Adapterhülse (10) führenden Freiraum (74) hineingreift, wobei das Verriegelungselement (22) das Haltemittel (20) radial zu der Montageachse (X) im Ruhezustand fixiert.

11. Steckverbinder (1) nach einem der Ansprüche 8 bis 10,
**dadurch gekennzeichnet, dass** das Haltemittel (20) Führungsmittel (76) aufweist, welche derart mit zumindest einer an der Adapterhülse (10) ausgebildeten Führungsnut (78) zusammenwirken, dass eine nicht senkrecht zur Montageachse (X), von außen auf das Betätigungsmittel (68) wirkende Kraft (F) in eine senkrecht zur Montageachse (X) wirkende Kraft (F) umgelenkt wird.

12. Steckverbinder (1) nach einem der Ansprüche 1 bis 11,
**dadurch gekennzeichnet, dass** in dem Aufnahmekanal (8) mindestens ein Dichtungselement (88), insbesondere mindestens zwei Dichtungselemente (88) angeordnet sind, und das Dichtungselement (88) zwischen einer in Montagerichtung (M) weisenden Seitenwand (90) der Adapterhülse (10) und einer gegen die Montagerichtung (M) weisenden und sich senkrecht von einer Innenwandung (44) des Aufnahmekanals (8) erstreckenden Stufenfläche (92) angeordnet ist, wobei das Dichtungselement (88) gegen eine Innenwandung (44) des Aufnahmekanals (8) abdichtet.

## Claims

1. Connector (1) for connecting at least one first fluid line to a second fluid line formed with a mating connector (18) or for connecting an assembly formed with a mating connector (18), comprising an adapter sleeve (10) and a housing (2) with a through channel (4), wherein one end of the housing (2) is formed as a sleeve section (6) with a receptacle channel (8) fluidically connected to the through channel (4) for receiving the adapter sleeve (10), wherein the adapter sleeve (10) can be inserted into the receptacle channel (8) of the sleeve section (6) in a mounting direction (M) directed axially to a mounting axis (X) and is held releasably in the receptacle channel (8) in a positive-locking manner in the axial direction, the adapter sleeve (10) having a through opening (14) for a plug shank (16) of the mating connector (18) and having a retaining means (20) for releasably retaining the mating connector (18), the retaining means (20) projecting into the through opening (14) in a rest state and being designed to be elastically expandable radially with respect to the mounting axis (X) into a tension state, and the plug shank (16) of the mating connector (18) can be inserted into the through opening (14) of the adapter sleeve (10) in a pre-assembly position of the connector (1) and, in a mounting position of the connector (1), the retaining means (20) can block the mating connector (18) axially with respect to the mounting axis (X), wherein a locking element (22) movable axially to the mounting axis (X) is arranged movably on an outer circumference (24) of the sleeve section (6) from a release position releasing the retaining means (20) into a lock position locking the retaining means (20), wherein the locking element (22) in its release position in the pre-assembly position of the connector (1) is fixed on the sleeve section (6) at least axially against movement into the locking position, wherein a positive-locking element (12) fixes the adapter sleeve (10) in the receptacle channel (8) in an axial direction relative to the mounting axis (X) and in a rest state projects into the through opening (14) and is designed to be elastically expandable radially relative to the mounting axis (X) into a tension state,
**characterized in that** the sleeve section (6) and the adapter sleeve (10) each have at least one breakthrough (42) which is radial with respect to the mounting axis (X), at least one breakthrough (42) of the adapter sleeve (10) and of the sleeve section (6) being arranged adjacent to one another in a fixed state of the adapter sleeve (10) in the sleeve section (6) in such a way, that the positive-locking element (12) can be inserted radially to the mounting axis (X) through the breakthroughs (42) of the adapter sleeve (10) and the sleeve section (6) into the through opening (14) of the adapter sleeve (10).

2. Connector (1) according to claim 1,
**characterized in that** in the rest state, the positive-locking element (12) projects radially with respect to the mounting axis (X) out of the breakthrough (42) of the adapter sleeve (10), as a result of which the positive-locking element (12) blocks the movement of the locking element (22) from the release position into the lock position in the rest state.

3. Connector (1) according to claim 1 or 2,
**characterized in that** the positive-locking element (12) is designed as a connection clamp and has two clamping arms (46) which project into the through opening (14) in the rest state, the clamping arms (46) having at least one abutment section (50), in particular being connected via the abutment section (50), the abutment section (50) being arranged in a breakthrough (42) in the sleeve section (6) and being engaged over on one side by the locking element (22).

4. Connector (1) according to claim 3,
**characterized in that** a support element (51) is arranged on the abutment section (50), which element projects into the through opening (14) and can be supported, in particular in an assembly position, on the plug shank (16) of the mating connector (18).

5. Connector (1) according to one of claims 1 to 4,
**characterized in that** the adapter sleeve (10) has two windows (54) which are opposite one another by 180°, are radially open with respect to the mounting axis (X), are arranged axially spaced from the breakthroughs (42) with respect to the mounting axis (X) and, in particular, are offset by 90° with respect to the breakthroughs (42) about the mounting axis (X), wherein the retaining means (20) has two retaining arms (56) with which it engages around the windows (54) and, in the rest state, projects with the retaining arms (56) through the windows (54) into the through opening (14) of the adapter sleeve (10).

6. Connector (1) according to claim 5,
**characterized in that** the retaining arms (56) have at least one contact section (58), the contact section (58) being arranged in a contact groove (60) which is formed in a contact element (62) or an inner wall (64) of the adapter sleeve (10), preferably the retaining arms (56) each have a contact section (58) and are arranged in particular in two contact grooves (60) which are open in the circumferential direction, which are formed in the contact element (62), wherein the retaining arms (56) can be supported and hooked with at least one contact section (58) in the contact groove (60) radially to the mounting axis (X) and are thereby held in an installation position in or on the adapter sleeve (10).

7. Connector (1) according to one of claims 1 to 6,
**characterized in that** the retaining means (20) distances radially to the mounting axis (X) with an actuation means (68) from an outer circumference (70) of the adapter sleeve (10), wherein the maximum radial distance of the actuation means (68) to an outer circumference (70) of the adapter sleeve (10) is greater in the rest state than in the tension state.

8. Connector (1) according to claim 7,
**characterized in that** the retaining means (20) can be elastically deformed from the rest state into the expanded tension state by a force (F) acting radially on the actuation means (68) from the outside, the actuation means (68) being arranged opposite the contact groove (60), and the retaining means (20) being supported radially with respect to the mounting axis (X) by the contact section (58) in the contact groove (60).

9. Connector (1) according to claim 7 or 8,
**characterized in that** the retaining means (20) in the tension state, in particular with the actuation means (68), blocks the movement of the locking element (22) from the release position into the lock position.

10. Connector (1) according to claim 8 or 9,
**characterized in that** the locking element (22) with at least one mandrel (72) projecting axially from the locking element (22) against the mounting direction (M) engages in an assembly state through a clearance (74) leading axially between the actuation means (68) of the retaining means (20) and the adapter sleeve (10), wherein the locking element (22) fixes the retaining means (20) radially to the mounting axis (X) in the rest state.

11. Connector (1) according to one of claims 8 to 10,
**characterized in that** the retaining means (20) has guiding means (76) which interact with at least one guiding groove (78) formed on the adapter sleeve (10) in such a way that a force (F) acting on the actuation means (68) from the outside, not perpendicular to the mounting axis (X), is deflected into a force (F) acting perpendicular to the mounting axis (X).

12. Connector (1) according to one of claims 1 to 11,
**characterized in that** at least one sealing element (88), in particular at least two sealing elements (88), are arranged in the receptacle channel (8), and the sealing element (88) is arranged between a side wall (90) of the adapter sleeve (10) pointing in the mounting direction (M) and a stepped surface (92) pointing against the mounting direction (M) and extending perpendicularly from an inner wall (44) of the receptacle channel (8), wherein the sealing element (88) seals against an inner wall (44) of the receptacle channel (8).

## Revendications

1. Raccord de type enfichable (1) permettant de raccorder au moins une première conduite de fluide à une deuxième conduite de fluide réalisée avec un raccord de type enfichable conjugué (18) ou permettant de connecter une unité réalisée avec un raccord de type enfichable conjugué (18), comprenant un manchon adaptateur (10) et un boîtier (2) comportant un canal de passage (4), une extrémité du boîtier (2) étant réalisée sous forme de partie pour manchon (6) comportant un canal de réception (8) raccordé de manière fluidique au canal de passage (4) et servant à la réception du manchon adaptateur (10), le manchon adaptateur (10) pouvant être enfiché dans le canal de réception (8) de la partie pour manchon (6) dans une direction de montage (M) orientée axialement par rapport à l'axe de montage (X) et étant retenu par complémentarité de formes de manière libérable dans la direction axiale dans le canal de réception (8), le manchon adaptateur (10) ayant une ouverture de passage (14) réalisée pour une tige enfichable (16) du raccord de type enfichable conjugué (18) et présentant un moyen de retenue (20) servant à la fixation libérable du raccord de type enfichable conjugué (18), le moyen de retenue (20) pénétrant dans l'ouverture de passage (14) dans un état de repos et étant réalisé de manière à pouvoir être élargi élastiquement radialement par rapport à l'axe de montage (X) dans un état de tension, et la tige enfichable (16) du raccord de type enfichable conjugué (18) pouvant être insérée dans l'ouverture de passage (14) du manchon adaptateur (10) dans une position de prémontage du raccord de type enfichable (1) et le moyen de retenue (20) pouvant bloquer le raccord de type enfichable conjugué (18) axialement par rapport à l'axe de montage (X) dans une position de montage du raccord de type enfichable (1), un élément de verrouillage (22) mobile axialement par rapport à l'axe de montage (X) étant disposé sur une périphérie extérieure (24) de la partie pour manchon (6) de manière mobile d'une position de libération libérant le moyen de retenue (20) à une position de verrouillage verrouillant le moyen de retenue (20), l'élément de verrouillage (22), dans sa position de libération dans la position de prémontage du raccord de type enfichable (1), étant fixé sur la partie pour manchon (6) au moins axialement de manière à empêcher un mouvement dans la position de verrouillage, un élément d'engagement par complémentarité de formes (12) fixant le manchon adaptateur (10) par complémentarité de formes dans le canal de réception (8) dans la direction axiale par rapport à l'axe de montage (X) et pénétrant dans l'ouverture de passage (14) dans un état de repos et étant réalisé de manière à pouvoir être élargi élastiquement dans un état de tension radialement par rapport à l'axe de montage (X),
**caractérisé en ce que** la partie pour manchon (6) et le manchon adaptateur (10) présentent respectivement au moins un orifice (42) radial par rapport à l'axe de montage (X), au moins respectivement un orifice (42) du manchon adaptateur (10) et de la partie pour manchon (6) étant juxtaposés dans un état fixé du manchon adaptateur (10) dans la partie pour manchon (6), de telle sorte que l'élément d'engagement par complémentarité de formes (12) puisse être inséré radialement par rapport à l'axe de montage (X) à travers les orifices (42) du manchon adaptateur (10) et de la partie pour manchon (6) dans l'ouverture de passage (14) du manchon adaptateur (10).

2. Raccord de type enfichable (1) selon la revendication 1,
**caractérisé en ce que** l'élément d'engagement par complémentarité de formes (12) fait saillie hors de l'orifice (42) du manchon adaptateur (10) radialement par rapport à l'axe de montage (X) dans l'état de repos, de sorte que l'élément d'engagement par complémentarité de formes (12) bloque le mouvement de l'élément de verrouillage (22) de la position de libération à la position de verrouillage dans l'état de repos.

3. Raccord de type enfichable (1) selon la revendication 1 ou 2, **caractérisé en ce que** l'élément d'engagement par complémentarité de formes (12) est réalisé sous forme d'attache de raccordement et présente deux bras d'attache (46), lesquels pénètrent dans l'ouverture de passage (14) dans l'état de repos, les bras d'attache (46) présentant au moins une partie d'appui (50), en particulier étant raccordés par le biais de la partie d'appui (50), la partie d'appui (50) étant disposée dans un orifice (42) dans la partie pour manchon (6) et étant recouverte d'un côté par l'élément de verrouillage (22).

4. Raccord de type enfichable (1) selon la revendication 3,
**caractérisé en ce qu'**un élément de support (51) est disposé sur la partie d'appui (50), lequel pénètre dans l'ouverture de passage (14) et peut en particulier être supporté sur la tige enfichable (16) du raccord de type enfichable conjugué (18) dans une position de montage.

5. Raccord de type enfichable (1) selon l'une des revendications 1 à 4, **caractérisé en ce que** le manchon adaptateur (10) présente deux fenêtres (54) opposées de 180°, ouvertes radialement par rapport à l'axe de montage (X), lesquelles sont disposées de manière espacée des orifices (42) axialement par rapport à l'axe de montage (X) et sont en particulier décalées de 90 ° par rapport aux orifices (42) autour de l'axe de montage (X), le moyen de retenue (20) présentant deux bras de retenue (56), par lesquels il entoure les fenêtres (54) et pénétrant par les bras de retenue (56) à travers les fenêtres (54) dans l'ouverture de passage (14) du manchon adaptateur (10) dans l'état de repos.

6. Raccord de type enfichable (1) selon la revendication 5,
**caractérisé en ce que** les bras de retenue (56) présentent au moins une partie de contact (58), la partie de contact (58) étant disposée dans une rainure de contact (60) qui est réalisée dans un élément de contact (62) ou une paroi intérieure (64) du manchon adaptateur (10), de préférence les bras de retenue (56) présentent respectivement une partie de contact (58) et sont disposés en particulier dans deux rainures de contact (60) ouvertes dans la direction périphérique, lesquelles rainures de contact sont réalisées dans l'élément de contact (62), les bras de retenue (56) étant supportés et pouvant s'accrocher par au moins une partie de contact (58) dans la rainure de contact (60) radialement par rapport à l'axe de montage (X) et étant ainsi retenus dans une position d'installation dans ou sur le manchon adaptateur (10).

7. Raccord de type enfichable (1) selon l'une des revendications 1 à 6, **caractérisé en ce que** le moyen de retenue (20) dépasse d'une périphérie extérieure (70) du manchon adaptateur (10) radialement par rapport à l'axe de montage (X) par un moyen d'actionnement (68), la distance radiale maximale du moyen d'actionnement (68) à une périphérie extérieure (70) du manchon adaptateur (10) étant plus grande dans l'état de repos que dans l'état de tension.

8. Raccord de type enfichable (1) selon la revendication 7, **caractérisé en ce que,** par une force (F) agissant depuis l'extérieur radialement sur le moyen d'actionnement (68), le moyen de retenue (20) peut être déformé élastiquement de l'état de repos à l'état de tension élargi, le moyen d'actionnement (68) étant disposé de manière opposée à la rainure de contact (60), et le moyen de retenue (20) étant supporté radialement par rapport à l'axe de montage (X) avec la partie de contact (58) dans la rainure de contact (60).

9. Raccord de type enfichable (1) selon la revendication 7 ou 8, **caractérisé en ce que** le moyen de retenue (20) bloque le mouvement de l'élément de verrouillage (22) de la position de libération à la position de verrouillage dans l'état de tension, en particulier à l'aide du moyen d'actionnement (68).

10. Raccord de type enfichable (1) selon la revendication 8 ou 9, **caractérisé en ce que** l'élément de verrouillage (22) vient en prise à travers un espace libre (74) menant axialement entre le moyen d'actionnement (68) du moyen de retenue (20) et le manchon adaptateur (10), par au moins une languette (72) dépassant axialement de l'élément de verrouillage (22) en sens inverse de la direction de montage (M) dans un état de montage, l'élément de verrouillage (22) fixant le moyen de retenue (20) radialement par rapport à l'axe de montage (X) dans l'état de repos.

11. Raccord de type enfichable (1) selon l'une des revendications 8 à 10, **caractérisé en ce que** le moyen de retenue (20) présente des moyens de guidage (76), lesquels coopèrent avec au moins une rainure de guidage (78) réalisée sur le manchon adaptateur (10), de telle sorte qu'une force (F) agissant depuis l'extérieur sur le moyen d'actionnement (68) et non perpendiculaire à l'axe de montage (X) soit déviée en une force (F) agissant perpendiculairement à l'axe de montage (X).

12. Raccord de type enfichable (1) selon l'une des revendications 1 à 11, **caractérisé en ce qu'**au moins un élément d'étanchéité (88), en particulier au moins deux éléments d'étanchéité (88) sont disposés dans le canal de réception (8), et l'élément d'étanchéité (88) est disposé entre une paroi latérale (90), orientée dans la direction de montage (M), du manchon adaptateur (10) et une surface étagée (92) orientée en sens inverse de la direction de montage (M) et s'étendant perpendiculairement à partir d'une paroi intérieure (44) du canal de réception (8), l'élément d'étanchéité (88) réalisant l'étanchéité contre une paroi intérieure (44) du canal de réception (8).
